# EUROPEAN PATENT SPECIFICATION

(11) **EP 4 060 417 B1**
(45) Date of publication and mention of the grant of the patent: **29.01.2025**
(21) Application number: 22161436.5
(22) Date of filing: 10.03.2022
(51) Int. Cl.: G03G 15/00

(54) **INSPECTION DEVICE, IMAGE FORMING SYSTEM, INSPECTION METHOD, AND CARRIER MEDIUM**
INSPEKTIONSVORRICHTUNG, BILDERZEUGUNGSSYSTEM, INSPEKTIONSVERFAHREN UND TRÄGERMEDIUM
DISPOSITIF D'INSPECTION, SYSTÈME DE FORMATION D'IMAGES, PROCÉDÉ D'INSPECTION ET SUPPORT

(30) Priority: 19.03.2021 JP 2021046489
(43) Date of publication of application: 21.09.2022
(73) Proprietor: Ricoh Company, Ltd., Tokyo 143-8555 (JP)
(72) Inventor: Tachibana, Hiroki, Tokyo 143-8555 (JP)
(74) Representative: Marks & Clerk LLP

(56) References cited:
- JP-A- 2005 205 747
- JP-A- 2014 184 649
- JP-A- 2017 202 627
- JP-A- 2019 089 268
- US-A1- 2017 031 636
- US-A1- 2020 314 274
- US-B2- 9 823 884

## Description

### BACKGROUND

### Technical Field

Embodiments of the present disclosure relate to an inspection device, an image forming system, an inspection method, and a carrier medium.

### Related Art

Various technologies have been developed that detect a defect in an image formed by an image forming apparatus, based on a result of reading the image. For example, when a defect is detected, a technology is known that inserts a slip sheet (insertion sheet) between a bundle of printed materials so that a printed material in which the defect is detected is easily found from the bundle of printed materials stacked on a sheet ejection tray.

Japanese Unexamined Patent Application Publication No. 2019-089268 discloses such an image forming apparatus that displays the position of an inserted slip sheet on a display unit.

However, since the appearance of a conveyance medium such as a slip sheet inserted into the bundle of printed materials is not identified, it may take time to find the conveyance medium. When it takes time to find the conveyance medium, it takes more time to find the printed material in which the defect is detected. For these reasons, the overall operation time may be affected due to additional work, for example, checking the defective printed material and replacing the defective printed material with a printed material without defects accordingly.

US-A-2020-314274 discloses an image forming apparatus including a printing unit, a verification unit, an insertion unit, and a display unit. JP-A-2014184649 discloses in a case where defects have occurred in four places within a printing data zone of a sheet P1, an interleaf sheet P2 is printed with four code images. US-A-2017-031636 discloses an inspection system including an inspection apparatus configured to examine, for each print, whether a defect has occurred on at least one print side based on a read image of the at least one print side and an image that corresponds to a read image, and configured to notify a printer of sheet identification information about a sheet on which an original image of a certain page is printed. JP-A-2017202627 discloses an image inspection device to enable a user to easily perform confirmation work as to whether a problem exists in the quality of an output image when an image failure is detected in the output image formed on a sheet. JP-A-2005205747 discloses a method to support a search for a defective printed matter from among printed matters which are printed in large quantities.

### SUMMARY

An object of the present disclosure is to facilitate finding of a printed material having a defect corresponding to a conveyance medium by recognizing the appearance of the conveyance medium such as a slip sheet to be ejected when the defect is detected in an image on the conveyance medium. The invention is set out in the appended set of claims.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating an overall configuration of an image forming system, according to a first embodiment of the present disclosure;
FIG. 2 is a diagram illustrating a hardware configuration of an image forming apparatus of the image forming system of FIG. 1;
FIG. 3 is a diagram illustrating a hardware configuration of a printer of the image forming system of FIG. 1;
FIG. 4 is a diagram illustrating a hardware configuration of an inspection device of the image forming apparatus of FIG. 2;
FIG. 5 is a diagram illustrating functions of a digital front end (DFE) of the image forming system of FIG. 1;
FIG. 6 is a diagram illustrating functions of the printer of the image forming apparatus of FIG. 2;
FIG. 7 is a diagram illustrating functions of the inspection device of the image forming apparatus of FIG. 2;
FIG. 8 is a diagram illustrating items of job information, according to the first embodiment of the present disclosure;
FIG. 9 is a sequence diagram illustrating an example of print process without a slip sheet;
FIG. 10 is a sequence diagram illustrating an example of the print process with the slip sheet;
FIG. 11 is a flowchart of an example of an inspection process;
FIG. 12 is a diagram illustrating an example of a slip sheet;
FIG. 13 is a diagram illustrating an example of a defect display screen;
FIG. 14 is a diagram illustrating an example of a job list;
FIG. 15 is a diagram illustrating an example of a defect detection page list;
FIG. 16 is a diagram illustrating an example of a defect detection image;
FIG. 17 is a diagram illustrating an example of a setting screen of an insertion interval of the slip sheet;
FIG. 18 is a diagram illustrating an example of a setting screen of a slip sheet feeding tray;
FIG. 19 is a flowchart of a display control process, according to a second embodiment of the present disclosure;
FIG. 20 is a diagram illustrating a result of display control, according to the second embodiment of the present disclosure;
FIG. 21 is a diagram illustrating an example of the defect detection page list including a result of character recognition;
FIG. 22 is a diagram illustrating a method of ejecting sheets to a sheet ejection tray, according to an embodiment of the present disclosure;
FIG. 23 is a diagram illustrating another method of ejecting sheets to the sheet ejection tray, according to an embodiment of the present disclosure;
FIG. 24 is a diagram illustrating yet another method of ejecting sheets to the sheet ejection tray, according to an embodiment of the present disclosure;
FIG. 25 is a diagram illustrating yet another method of ejecting sheets to the sheet ejection tray, according to an embodiment of the present disclosure; and
FIG. 26 is a diagram illustrating the defect detection page list in the case of ejecting sheets to a plurality of sheet ejection trays according to the second embodiment of the present disclosure.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### First Embodiment

Descriptions are given of an image forming system according to a first embodiment of the present disclosure, with reference to the drawings.

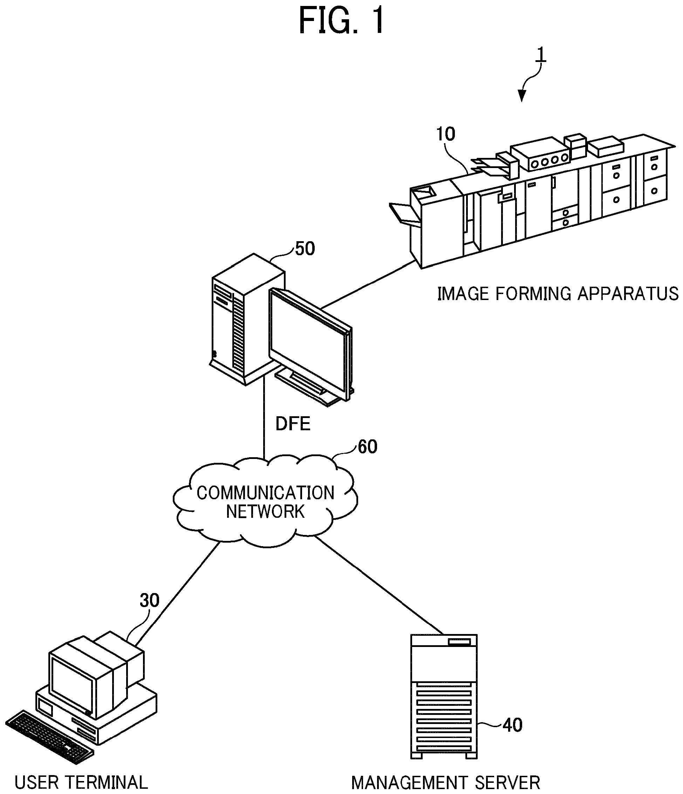

FIG. 1 is a diagram illustrating an overall configuration of an image forming system, according to embodiments of the present disclosure.

An image forming system 1 includes an image forming apparatus 10, a user terminal 30, a management server 40, and a digital front end (DFE) 50.

The image forming apparatus 10 is an apparatus that forms an image, and is, for example, a color production printer, a laser printer, or an inkjet printer. The image forming apparatus 10 receives image data from the DFE 50 and prints the image on a sheet based on the received image data. Note that "sheet" is an example of a conveyance medium on which an image is formed.

The user terminal 30 is a terminal that receives an operation from a user and instructs to print an image. Specifically, the user terminal 30 transmits job data including image data to the DFE 50 or the management server 40. The user terminal 30 transmits information indicating a threshold in color stabilization processing to the DFE 50 in response to an operation of the user. In addition, the user terminal 30 receives display control by the DFE 50 and displays a screen indicating an execution status of the color stabilization processing.

The management server 40 adds the job data as a queue to a memory that stores the job data waiting for printing in response to the receipt of the job data from the user terminal 30. The management server 40 extracts job data from the queue in the order in which the job data is added to the queue or in accordance with a priority set appropriately. Then, the management server 40 transmits the job data to the DFE 50.

The DFE 50 is an apparatus that controls the image forming apparatus 10, for example, a DFE. The DFE 50 is communicably connected to the image forming apparatus 10, the user terminal 30, and the management server 40.

When the DFE 50 receives job data with a signal that instructs to print the image from the user terminal 30 or the management server 40, the DFE 50 converts the job data into image data in a format that is processed by the image forming apparatus 10, using a raster image processor (RIP) engine included in the image forming apparatus 10. Then, the DFE 50 transmits the converted image data to the image forming apparatus 10.

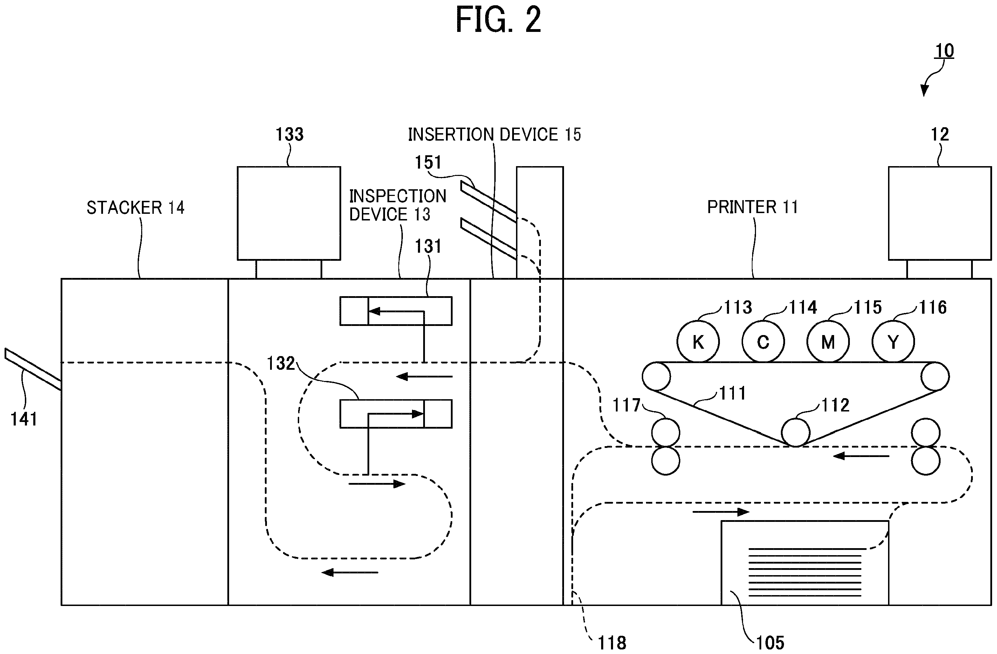

FIG. 2 is a diagram illustrating a hardware configuration of an image forming apparatus of the image forming system of FIG. 1.

The image forming apparatus 10 includes a printer 11, an inspection device 13, a stacker 14, and an insertion device 15.

The printer 11 receives the job data including a print image (rasterized image) from an external apparatus such as the DFE 50. Then, the printer 11 executes printing in response to an execution instruction based on the received job data or an execution instruction based on the job data stored in the printer 11 by a user's operation on an operation panel 12.

The printer 11 has a configuration in which photoconductor drums 116, 115, 114, and 113 are disposed along an intermediate transfer belt 111. The photoconductor drums 116, 115, 114, and 113 form yellow (Y), magenta (M), cyan (C), and black (K) toner images, respectively. The intermediate transfer belt 111 is a moving unit of an endless loop. Images of the respective colors are developed with toner on the respective surfaces of the photoconductor drums 116, 115, 114, and 113 and are transferred and superimposed one after another onto the surface of the intermediate transfer belt 111 to form a full-color image.

The full-color image borne on the intermediate transfer belt 111 is transferred onto the sheet by a transfer roller 112. The sheet is fed from a sheet feeding tray 105 and conveyed by a transfer roller 112. Then, the sheet is further conveyed, and the toner is fixed to the sheet by a fixing roller 117. Note that, when outputting a slip sheet without printing, another sheet feeding tray for the slip sheet may be provided separate from the sheet feeding tray 105.

In the case of duplex printing, after the image is formed on the front side, the sheet is conveyed to a sheet reverse passage 118 in the sheet conveyance passage, then is reversed, and is conveyed again to the position of the transfer roller 112.

The inspection device 13 is a device that inspects printed sheets by the printer 11. Each of the printed sheets to be inspected is referred to as a first conveyance medium in the present disclosure. The inspection device 13 includes a first inline sensor 131, a second inline sensor 132, and an operation panel 133. The inspection device 13 may not include the operation panel 133. In this case, the inspection device 13 may be configured to receive an operation through the operation panel 12 of the printer 11 or a computer connected via a communication network.

The first inline sensor 131 and the second inline sensor 132 read the images fixed on both sides of the sheet by the fixing roller 117 and obtain read image data indicating the read images. The number of inline sensors is not limited to two and may be one or three or more as long as both sides of the sheet are read. An inline sensor includes a light source and a line image sensor. The light source irradiate light onto a sheet passing over a reading position. The line image sensor includes a plurality of imaging elements aligned one dimensionally in the width direction of a sheet. The plurality of imaging elements optically converts reflected light reflected on the sheet for each pixel to read the reflected light. The inline sensor reads an image printed on the sheet as a two-dimensional image by repeatedly performing an operation of reading the image for one line in the width direction of the sheet, in accordance with the sheet passing operation over the reading position. Further, the line image sensor captures read images of three colors of red, green, and blue (RGB). The inline sensor is an example of an image acquisition unit that acquires the image on the sheet. The image acquisition unit may acquire an image other than the read image data as long as the image is an image for detecting a defect, such as image data or a thumbnail image of image data.

The stacker 14 includes a sheet ejection tray 141 and stacks printed sheets ejected from the printer 11 via the inspection device 13 on the sheet ejection tray 141. The stacker 14 and the sheet ejection tray 141 are configured to receive and stack the printed sheets and the slip sheets. The stacker 14 may have a plurality of sheet ejection trays 141.

The insertion device 15 includes an insertion tray 151 and supplies slip sheets under the control of the printer 11. Specifically, the printer 11 stores setting information for selecting a slip sheet feeding tray. In a case where the setting information indicates that the slip sheet feeding tray is the insertion tray 151, the printer 11 causes the insertion device 15 to supply the slip sheet from the insertion tray 151 when a job for ejecting the slip sheet is executed.

The present embodiment is given providing that, for example, that the rasterized image is in the CMYK format (format in a subtractive color mode including cyan, magenta, yellow, and black) with 8-bit colors and 600 dpi resolution, and the read image is in the RGB format with 8-bit colors and 200 dpi resolution. However, embodiments of the present disclosure are not limited to the above-described data formats in image formation.

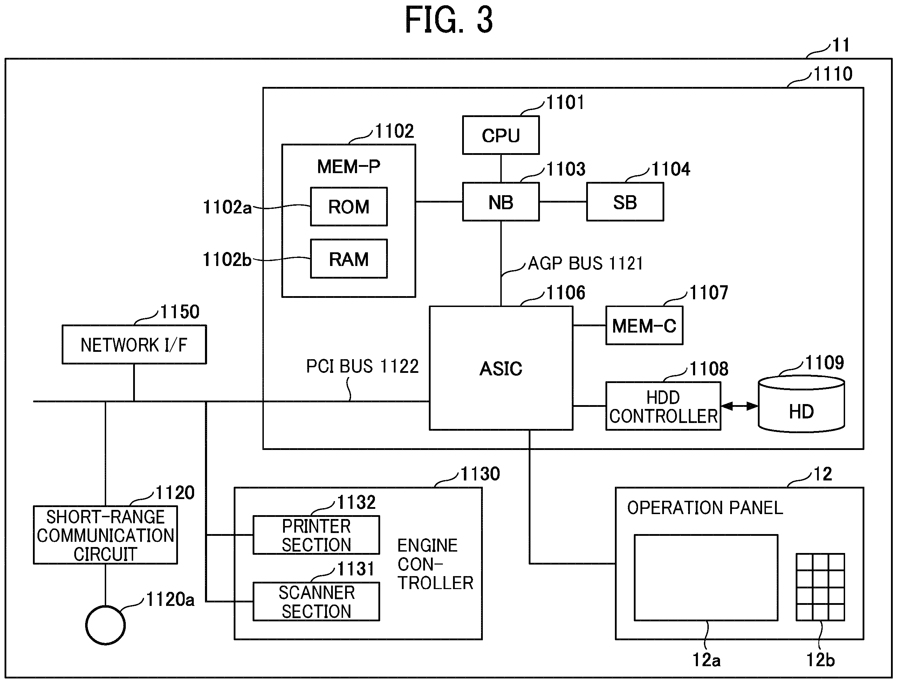

FIG. 3 is a diagram illustrating a hardware configuration of a printer of the image forming system of FIG. 1.

The printer 11 includes a controller 1110, a short-range communication circuit 1120, an engine controller 1130, the operation panel 12, and a network I/F 1150.

The controller 1110 includes a central processing unit (CPU) 1101 that is a main part of a computer, a system memory (MEM-P) 1102, a north bridge (NB) 1103, a south bridge (SB) 1104, an application specific integrated circuit (ASIC) 1106, a local memory (MEM-C) 1107 that is a memory unit, a hard disk drive (HDD) controller 1108, and a hard disk (HD) 1109 that is a memory.

The NB 1103 and the ASIC 1106 are connected by an accelerated graphics port (AGP) bus 1121.

The CPU 1101 is a control device that performs overall control of the printer 11. The NB 1103 is a bridge configured to connect the CPU 1101, the MEM-P 1102, the SB 1104, and the AGP bus 1121. The NB 1103 includes a memory controller that controls reading from and writing to the MEM-P 1102, a peripheral component interconnect (PCI) master, and an AGP target.

The MEM-P 1102 includes a read only memory (ROM) 1102a and a random access memory (RAM) 1102b. The ROM 1102a is a memory to store programs and data for implementing various functions of the controller 1110. The RAM 1102b is a memory configured to deploy programs, data or to render print data for memory printing. The program stored in the RAM 1102b may be provided as a file in an installable format or an executable format that the program is recorded in a computer-readable storage medium such as a compact disc-read only memory (CD-ROM), a compact disc-recordable (CD-R), or a digital versatile disc (DVD).

The SB 1104 is a bridge configured to connect the NB 1103 to PCI devices and peripheral devices. The ASIC 1106 is an integrated circuit (IC) for image process having a hardware element for image process and has a role of a bridge that connects the AGP bus 1121, the PCI bus 1122, the HDD controller 1108, and the MEM-C 1107 to each other.

The ASIC 1106 includes a PCI target, an AGP master, an arbiter (ARB) serving as a core of the ASIC 1106, a memory controller that controls the MEM-C 1107, a plurality of direct memory access controllers (DMAC) that rotates image data by hardware logic, and a PCI unit that transfers data between a scanner section 1131 and a printer section 1132 via the PCI bus 1122. A universal serial bus (USB) interface or an Institute of Electrical and Electronics Engineers 1394 (IEEE 1394) interface may be connected to the ASIC 1106.

The MEM-C 1107 is a local memory used as a copy image buffer and a code buffer. The HD 1109 is a memory that stores image data, font data used in printing, and forms. The HD 1109 controls reading or writing of data from or to the HD 1109 under the control of the CPU 1101.

The AGP bus 1121 is a bus interface for a graphics accelerator card that has been proposed to speed up graphics processing. The AGP bus 1121 is a bus that directly access the MEM-P 1102 at high throughput to speed up a graphics accelerator card.

The short-range communication circuit 1120 includes a short-range communication antenna 1120a. The short-range communication circuit 1120 is a communication circuit that communicates in compliance with the near field radio communication (NFC) or the Bluetooth^{®}.

The engine controller 1130 includes the scanner section 1131 and the printer section 1132. The operation panel 12 includes a panel display 12a and a hard keys 12b. The panel display 12a is, e.g., a touch panel that displays current settings or a selection screen that receives the user input. The hard keys 12b includes, e.g., a numeric keypad and a start key. The numeric keypad receives setting values of image forming parameters such as an image density parameter. The start key receives an instruction to start copying.

The controller 1110 controls the overall printer 11 and controls, for example, drawing, communication, and input from the operation panel 12. The scanner section 1131 reads the image formed on the conveyance medium such as a sheet and generates image data. The printer section 1132 includes a transfer device that transfers the image using a color material such as a toner image onto the conveyance medium such as the sheet, a fixing device that fixes the image, a heating device, a drying device, and performs image formation on the sheet. Further, the scanner section 1131 or the printer section 1132 executes image process such as error diffusion and gamma conversion.

The network I/F 1150 is an interface that performs communication of data through the communication network. The short-range communication circuit 1120 and the network I/F 1150 are electrically connected to the ASIC 1106 via the PCI bus 1122.

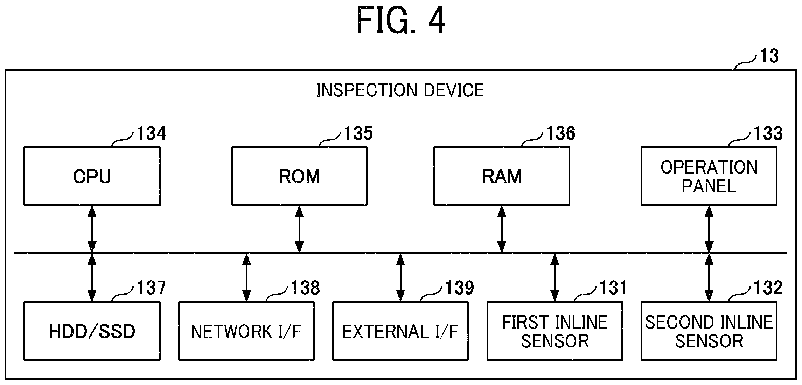

FIG. 4 is a diagram illustrating a hardware configuration of an inspection device of the image forming apparatus of FIG. 2.

The inspection device 13 includes the first inline sensor 131, the second inline sensor 132, the operation panel 133, and a CPU 134, a ROM 135, a RAM 136, an HDD/solid state drive (SSD) 137, a network I/F 138, and an external I/F 139. The CPU 134, the ROM 135, the RAM 136, and the HDD/SSD are configured by a computer.

The CPU 134 reads programs stored in the ROM 135 or the HDD/SSD 137 and stores the programs in the RAM 136. Then, the CPU 134 executes various processes in accordance with the program stored in the RAM 136. The processes are described below.

The ROM 135 is a non-volatility auxiliary memory device. The ROM 135 stores programs such as a basic input/output system (BIOS) that is programed basic operations of the inspection device 13.

The RAM 136 is a volatile main memory device. The RAM 136 is used as a working area of the CPU 134.

The HDD/SSD 137 is a large capacity non-volatility auxiliary memory device. The HDD/SSD 137 stores received image data, programs for various processes, and setting information. The processes are described below.

The network I/F 138 is, for example, a local area network (LAN) card, and is a relay unit for communicating with other devices via a communication network.

The external I/F 139 is a relay unit for communicating with the devices connected as external devices, such as the DFE 50, the printer 11, and the stacker 14.

Note that the DFE 50 has the substantially same hardware configuration as the hardware configuration of the inspection device 13, except that the DFE 50 has the first inline sensor 131, the second inline sensor 132, and the operation panel 133.

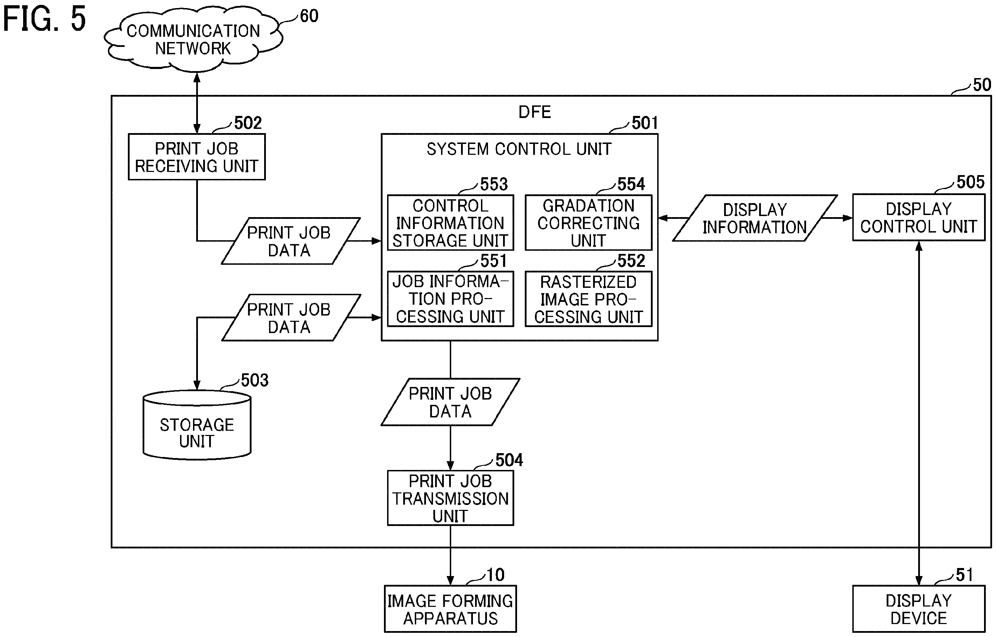

FIG. 5 is a diagram illustrating functions of the DFE of the image forming system of FIG. 1.

The DFE 50 includes a system control unit 501, a job receiving unit 502, a storage unit 503, a job transmission unit 504, and a display control unit 505. Each of the units of the DFE 50 is achieved by a CPU included in the DFE 50 executing processing defined in programs stored in a ROM included in the DFE 50.

The system control unit 501 includes a job information processing unit 551, a rasterized image processing unit 552, a control information storage unit 553, and a gradation correcting unit 554.

The job information processing unit 551 processes information about a job included in the job data.

The rasterized image processing unit 552 performs predetermined color conversion processing on the CMYK values or the RGB values of the input image data using a RIP engine and converts the CMYK values or the RGB values into image data in a CMYK format suitable for the image forming apparatus 10.

The control information storage unit 553 stores control information controlled by the system control unit 501.

The gradation correcting unit 554 corrects a gradation of the image data converted by the rasterized image processing unit 552.

The job receiving unit 502 receives the job data from the user terminal 30 or the management server 40 via the communication network 60.

The storage unit 503 stores the received job data.

The job transmission unit 504 transmits the job data to the image forming apparatus 10. The job data is generated through processing by the system control unit 501. The job data transmitted to the image forming apparatus 10 includes rasterized image data and job information indicating attributes of the job.

The display control unit 505 controls to display display information generated by the system control unit 501 on the display device 51.

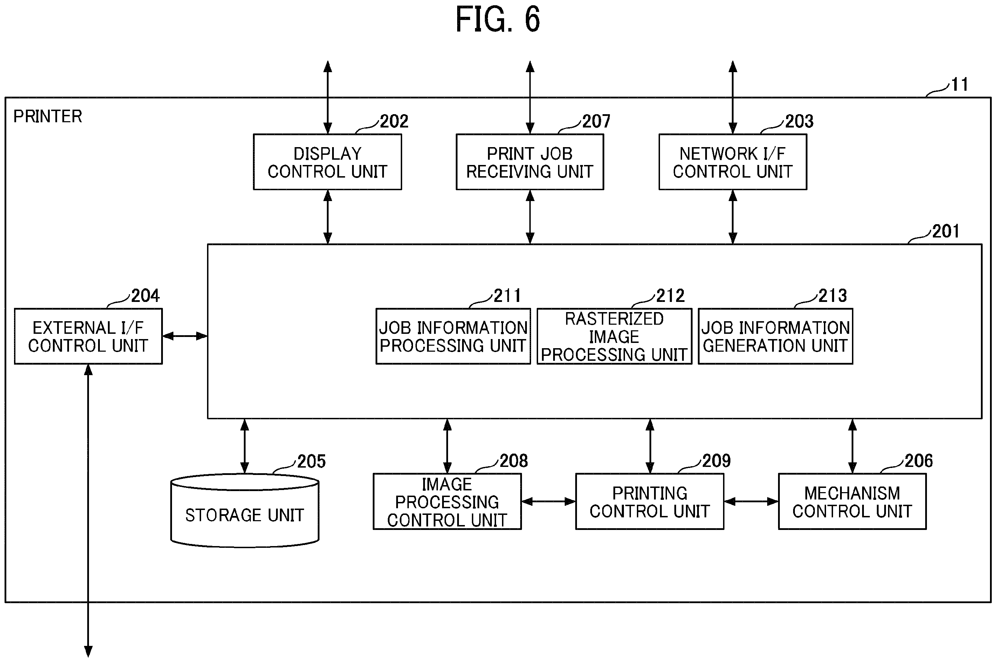

FIG. 6 is a diagram illustrating functions of the printer of the image forming apparatus of FIG. 2.

The printer 11 includes a system control unit 201, a display control unit 202, a network I/F control unit 203, an external I/F control unit 204, a storage unit 205, a mechanism control unit 206, a job receiving unit 207, an image processing control unit 208, and a printing control unit 209. Each of these units of the printer 11 is achieved by the CPU 1101 or the ASIC 1106 of the printer 11 executing a process defined in programs stored in the MEM-P 1102 or the MEM-C 1107.

The system control unit 201 controls the overall operation of the printer 11. The system control unit 201 includes a job information processing unit 211, a rasterized image processing unit 212, and a job information generation unit 213.

The job information processing unit 211 processes job information included in the job transmitted from the DFE 50. The rasterized image processing unit 212 processes the rasterized image data included in the job data transmitted from the DFE 50. The job information generation unit 213 generates job information for inserting the slip sheet in response to receipt of information to be inserted the slip sheet (slip sheet insertion information) from the inspection device 13. Note that an image may be printed on the slip sheet in advance, or handwritten text or image may be included. The image of the slip sheet may not be defined in advance.

Note that the slip sheet (insertion sheet) may be a sheet such as cut paper that is a conveyable medium by the printer 11. The conveyance medium may be a colored sheet, a blank sheet, or a blank sheet having a size different from the size of the sheet of the job, a film sheet, a plastic sheet, as long as the conveyance medium has identification information of the slip sheet (conveyance medium) and is stacked in a sheet feeding tray provided for the printer 11, to be conveyed and output according to an output instruction of the slip sheet. The slip sheet is referred to as a second conveyance medium while a printed sheet is referred to as a first conveyance medium as described above. The information printed on the slip sheet (second conveyance medium) may be printed by an image forming unit of the printer 11. Alternatively, the information printed on the slip sheet may be applied to or printed on the slip sheet in advance. The image forming unit of the printer 11 controls the printer section 1132 to form an image including the identification information of the second conveyance medium on the second conveyance medium. Accordingly, even when a plurality of defective printed sheets and a plurality of slip sheets corresponding to the defective printed sheets are ejected to an ejection device such as a sheet ejection tray, it is easy for a user to distinguish the slip sheets and confirm the defective printed sheets corresponding to each of the slip sheets.

The display control unit 202 controls to display various types of information including job information on the operation panel 12. The network I/F control unit 203 controls the network I/F 1150 and controls connection with a communication network. When another device is connected to the printer 11, the external I/F control unit 204 controls connection with the connected device. The storage unit 205 stores various types of information including job information.

The mechanism control unit 206 controls operations of mechanisms included in the printer 11, such as operations of a mechanism that performs sheet conveyance and operations of a mechanism that performs transfer process in the printer 11 including the printer section 1132. The job receiving unit 207 receives the job data from the DFE 50. The image processing control unit 208 processes the print image transferred by the mechanism control unit 206. The printing control unit 209 controls image formation on the conveyance medium. The mechanism control unit 206, the image processing control unit 208, and the printing control unit 209 cooperate with each other to function as the image forming unit that forms an image on the conveyance medium. Further, the image acquisition device such as the inline sensor may acquire an image after toner is fixed to the conveyance medium by the fixing roller 117 or the image before the conveyance medium enters the fixing roller 117 after the image is transferred by the transfer roller 112.

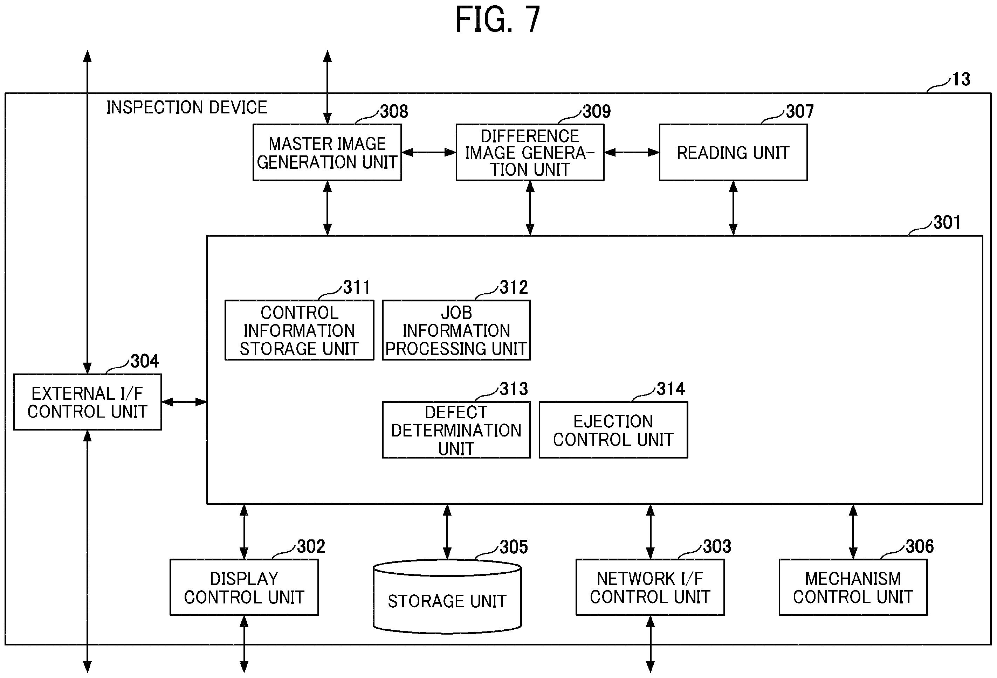

FIG. 7 is a diagram illustrating functions of the inspection device of the image forming apparatus of FIG. 2.

The inspection device 13 includes a system control unit 301, a display control unit 302, a network I/F control unit 303, an external I/F control unit 304, a storage unit 305, a mechanism control unit 306, a reading unit 307, a master image generation unit 308, and a difference image generation unit 309. Each of these units is achieved by the CPU 134 or the ASIC 1106 of the inspection device 13 executing processing defined in programs stored in the MEM-P 1102 or the MEM-C 1107 of the inspection device 13.

The system control unit 301 controls the overall operation of inspection device 13. The system control unit 301 includes a control information storage unit 311, a job information processing unit 312, a defect determination unit 313, and an ejection control unit 314.

The control information storage unit 311 stores control information controlled by the system control unit 301. Further, the control information storage unit 311 temporarily stores received job information while the job information is an object to be controlled.

The job information processing unit 312 extracts information to be processed by a post-processing device (for example, a device that performs post-processing such as the stacker 14) from job information and transmits the extracted information to the post-processing device via the external I/F control unit 304. Further, the job information processing unit 312 transfers job information excluding information to be processed by the post-processing device, to the master image generation unit 308, the defect determination unit 313, the reading unit 307, and the mechanism control unit 306.

The display control unit 302 controls to display various types of information including an inspection result on the operation panel 133 or a different device. The different device includes a terminal device used by a user, such as a personal computer (PC) or a tablet PC, the DFE 50, the printer 11. The display control unit 302 performs process of returning information stored in the inspection device 13 in response to a request from software such as a web browser executing in the different device. Further, the display control unit 302 and software executing in the different device transmit information of the inspection device 13 to the different device using a bidirectional communication protocol such as WebSocket and display the information in real time. For example, when software executing in the different device displays a list of defective printed sheets by accessing the inspection device 13, the list is automatically updated each time a defect occurs, and information of a defective printed sheet or information of the slip sheets is additionally displayed. The display control unit 302 may be included in the inspection device 13 as a web server or may be included in a cloud server that receives information of the inspection result from the inspection device 13. The operation panel 133, a display of the different device, and software such as the web browser are examples of a display unit on which the display control unit 302 of the present embodiment displays information.

The network I/F control unit 303 controls the network I/F 138. The external I/F control unit 304 controls the external I/F 139.

The storage unit 305 stores various types of information. Specifically, job execution history information related to the job that the control has been ended, and a difference image data indicating the difference between the read image data and the master image data are stored.

The mechanism control unit 306 controls an operation of a mechanism included in the inspection device 13 such as conveyance of the sheet.

The reading unit 307 controls the first inline sensor 131 and the second inline sensor 132 to read the image formed on a sheet by the printer 11, and to generate read image data indicating the read image.

The master image generation unit 308 generates master image data based on the rasterized image data. Specifically, the master image generation unit 308 converts rasterized image data in the CMYK format into master image data in the RGB format.

Note that the master image data is data serving as a reference for comparison with the read image data and is used as the correct data when printed correctly. The master image data may be created by reading the sheet on which a reference image is printed with the scanner section 1131, the inline sensor, or a scanner of an external device.

The difference image generation unit 309 generates difference image data indicating a difference in density values (RGB values) for each pixel between the master image data and the read image data.

The defect determination unit 313 determines whether the printed image has a defect by comparing the difference image data with a predetermined threshold. The threshold is information (value) serving as a criterion for determining that the image has the defect. The defect determination unit 313 refers to the threshold and determines that the image has the defect if the difference image data has an area exceeding the threshold. The threshold is, for example, a value indicating that a difference (comparison result) between density values of each pixel included in the difference image data is equal to or greater than a predetermined density value, or a value indicating an area of a portion where pixels having a difference equal to or greater than the predetermined density value are continuous. The setting of the threshold is changed by the user so that the threshold is increased (the criterion is relaxed) or decreased (the criterion is tightened). A defect refers to a portion of image data determined to be different from an image desired by the user (for example, master image data) when a determination result determined by the defect determination unit 313 exceeds a threshold. The defect includes, for example, a spot, a streak, a positional deviation of the image, a difference in color, and a void in color.

Note that the defect determination method may be a determination method of determining whether the value of a printed image exceeds a set threshold (difference from ideal image data) based on a read image data obtained by reading ideal image data in advance of printing, other than the above-described method of comparing master image data and read image data. Further, before defect determination process is performed, correction processing may be performed to increase the accuracy of the determination processing. The correction processing is processing such as skew correction of read image data for correcting read image data of a medium conveyed in a skewed manner to a correct orientation or position, or flare correction for correcting a white light portion in read image data at the time of reading.

When the defect determination unit 313 determines that the image has a defect, the ejection control unit 314 controls to eject the slip sheet (second conveyance medium) indicating that the image has the defect. The slip sheet is a sheet to be inserted between printed sheets stacked as a bundle of printed sheets on the stacker 14.

Specifically, when the defect determination unit 313 determines that the image has the defect, the ejection control unit 314 determines whether to insert the slip sheet based on a threshold of an insertion interval set in advance. When the ejection control unit 314 determines that the slip sheet is to be inserted, information for inserting the slip sheet (slip sheet insertion information) is generated and transmitted to the printer 11. Note that the ejection control unit 314 may instruct the printer 11 to feed a predetermined slip sheet from the sheet feeding tray provided in the printer 11 and eject the slip sheet without printing. The predetermined slip sheet includes, for example, a colored sheet or a sheet having a size different from the size of a sheet used in a print job.

Descriptions are given of information that the image forming system 1 controls.

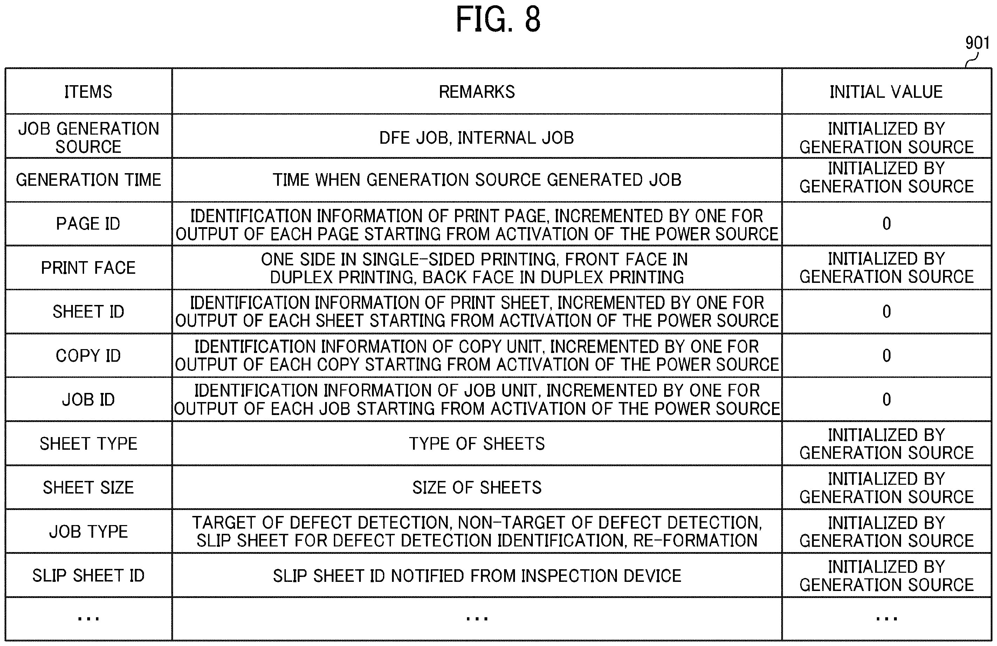

FIG. 8 is a diagram illustrating items of job information, according to embodiments of the present disclosure.

Job information 901 is information included in job data generated by the DFE 50 or the printer 11. The job information 901 includes items "JOB GENERATION SOURCE", "GENERATION TIME", "PAGE ID", "PRINT FACE", "SHEET ID", "COPY ID", "JOB ID", "SHEET TYPE", "SHEET SIZE", "JOB TYPE", and "SLIP SHEET ID".

The value of the item "JOB GENERATION SOURCE" is a value indicating the generation source of the print job data and is either a "DFE JOB" or an "INTERNAL JOB". When the job information is included in the job data to be transmitted to the image forming apparatus 10 by the DFE 50, the value of the item "JOB GENERATION SOURCE " is the "DFE JOB". When the job information generation unit 213 of the printer 11 generates the job data for the slip sheet, since the job data is generated inside the image forming apparatus 10, the value of the item "JOB GENERATION SOURCE" is the "INTERNAL JOB".

The value of the item "GENERATION TIME" is a value indicating the time at which the generation source generated the job information.

The value of the item "PAGE ID" is a numerical value to identify the print image and is incremented by one for output of each page starting from activation of the power source. The numerical value is set in the item "PAGE ID" when printing is executed.

The value of the item "PRINT FACE" is a value to identify whether the print image is to be printed on one side in single-sided printing, on the front face in duplex printing (front in duplex), or on the back face in duplex printing (back in duplex).

The value of the item "SHEET ID" is a numerical value to identify a sheet. When the duplex printing is performed, two page IDs are given to the same sheet ID. The value of the item "SHEET ID" is incremented by one for process of each page starting from activation of the power source. A numerical value is set in the item "SHEET ID" when printing is executed.

The value of the item "COPY ID" is a numerical value to identify a unit of copy and is incremented by one for output of each copy starting from activation of the power source. A numerical value is set in the item "COPY ID" when printing is executed.

The value of the item "JOB ID" is a numerical value to identify the job unit and is incremented by one for output of each job starting from activation of the power source. A numerical value is set in the item "JOB ID" when printing is executed.

The value of the item "SHEET TYPE" is a value indicating the type of the sheet. The value of the item "SHEET SIZE" is a value indicating the size of the sheet. Note that a sheet used as a slip sheet is selectable based on the settings, either a sheet used in the print job in which the defect is detected, or a sheet stacked on a designated sheet feeding tray. When a sheet to be used as a slip sheet is a sheet stacked on the designated sheet feeding tray, an inexpensive sheet is used to be dedicated to the slip sheet, and the cost is reduced.

The value of the item "JOB TYPE" is a value indicating whether the job is a target of defect detection, a non-target of defect detection, or a slip sheet for defect detection identification. When the job information generation unit 213 of the printer 11 generates the job data for slip sheets, the value of the item "JOB TYPE" is a value indicating a slip sheet for defect detection identification. When the value of the item "JOB TYPE" is a value indicating a non-target of defect detection or a slip sheet for defect detection identification, the defect determination unit 313 does not execute processing.

The value of the item "SLIP SHEET ID" is an identifier to identify the slip sheet. The value of the item "SLIP SHEET ID" is notified from the inspection device 13 to the printer 11. In a case of a job generated by the DFE 50 or a job generated by the printer 11 for other than a slip sheet, a slip sheet ID does not exist. For this reason, the value "-1" is set in the item "SLIP SHEET ID" as a value indicating that a slip sheet ID does not exist.

Next, descriptions are given of operations of the image forming system 1.

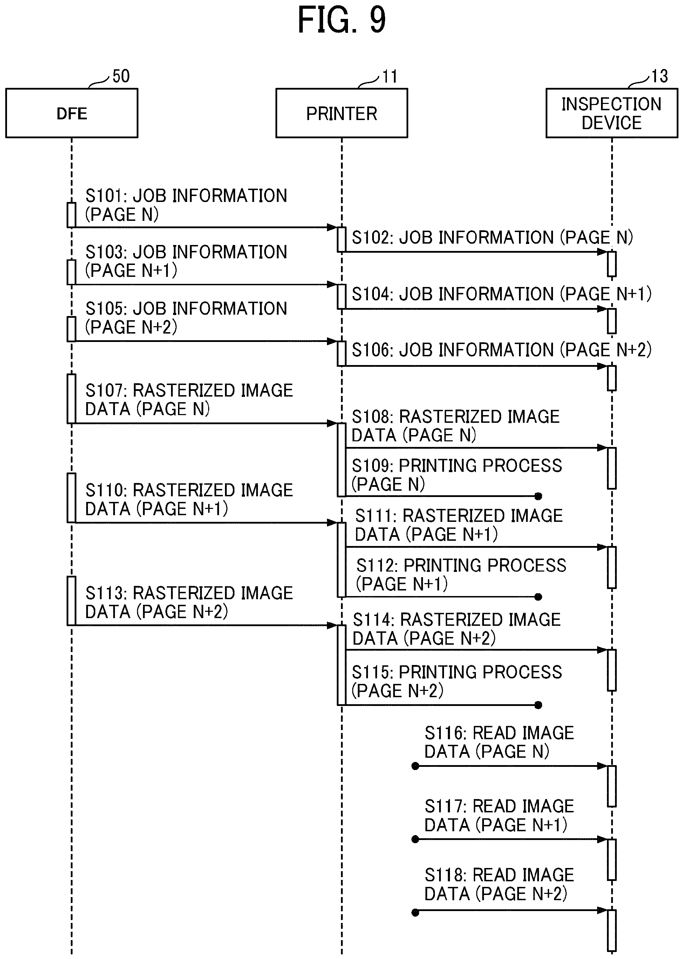

FIG. 9 is a sequence diagram illustrating an example of print process without the slip sheet.

When the job receiving unit 502 of the DFE 50 receives print job data from the user terminal 30 or the management server 40, the job information processing unit 551 generates job information for each page of the print job. Then, the job transmission unit 504 of the DFE 50 transmits job information (for example, page n) to the printer 11 (step S101).

When the job receiving unit 207 of the printer 11 receives the job information (page n), the job information processing unit 211 of the printer 11 performs processing such as addition of the numerical value indicating the page ID to update the received job information (page n) and transmits the updated job information to the inspection device 13 via the external I/F control unit 204 (step S102).

When the job receiving unit 502 of the DFE 50 receives the job data from the user terminal 30 or the management server 40, the rasterized image processing unit 552 of the DFE 50 performs processing of converting each page into the rasterized image data. The job information processing unit 551 and the rasterized image processing unit 552 of the DFE 50 perform processing in parallel, and the job information that completes processing first is transmitted to the printer 11 first. For example, the DFE 50 generates and transmits job information for page n+1 and page n+2 before starting transmission of the rasterized image data (page n). Then, the printer 11 updates the received job information and transmits the updated job information to the inspection device 13 (steps S103 to S106).

Then, the rasterized image processing unit 552 of the DFE 50 generates rasterized image data (page n) corresponding to the job information (page n). The job transmission unit 504 transmits the rasterized image (page n) to the printer 11 (step S107). The rasterized image processing unit 212 of the printer 11 performs processing for the rasterized image data and transmits the processed rasterized image data to the inspection device 13 (step S108).

The master image generation unit 308 of the inspection device 13 generates master image data (page n) according to the job information (page n) and the rasterized image data (page n). Then, in accordance with the job information, the inspection device 13 associates the order of pages detected by the first inline sensor 131 and the second inline sensor 132 with the generated master image data and stores the association result in the storage unit 305.

The image processing control unit 208, the printing control unit 209, and the mechanism control unit 206 of the printer 11 execute print process in accordance with the job information (page n) (step S109). The printed sheet (page n) is conveyed to the inspection device 13.

In steps S110 to S115, the DFE 50 and the printer 11 perform processing on the rasterized image (pages n+1 and n+2) in the same way. Then, the reading unit 307 of the inspection device 13 acquires read image data (pages n, n+1, n+2) read by the first inline sensor 131 and the second inline sensor 132 (steps S116 to S118).

Subsequently, the difference image generation unit 309 of the inspection device 13 generates difference image data indicating a difference between the master image data and the read image data for each page. The defect determination unit 313 determines whether the image includes any defect based on the generated difference image data and generates defect determination information. Then, the ejection control unit 314 executes inspection process including an inspection of whether to eject the slip sheet (second conveyance medium). Details of the inspection process are described below.

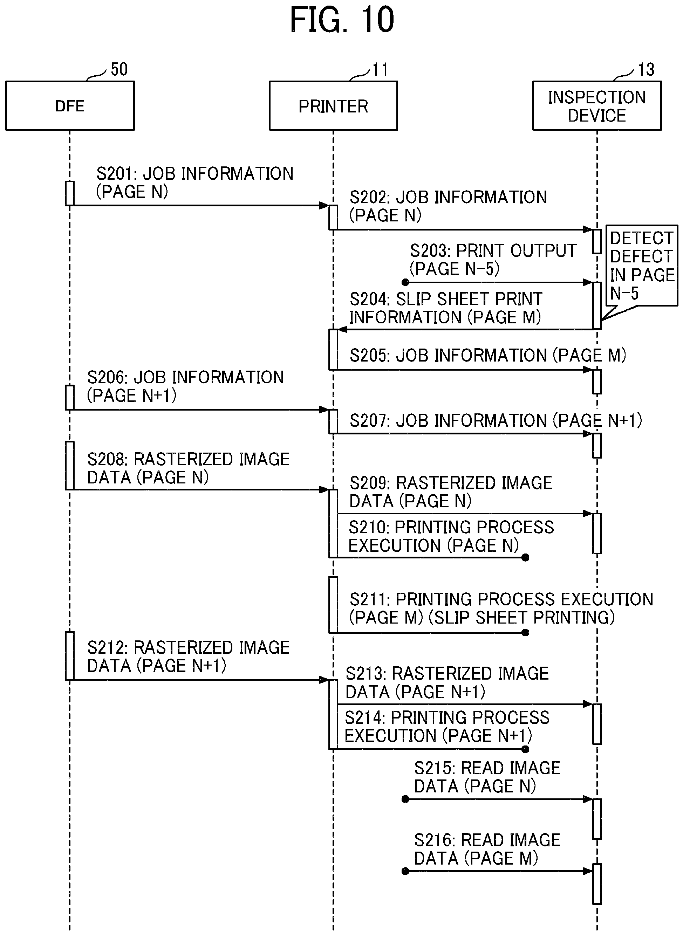

FIG. 10 is a sequence diagram illustrating an example of the print process with the slip sheet.

In the print process with slip sheet illustrated in FIG. 10, step S201 and step S202 are the same as step S101 and step S102, respectively, of the print process without slip sheet illustrated in FIG. 9.

In the case the print process with slip sheet, for example, in step S203, the defect determination unit 313 determines that the image includes a defect for the page n-5 on which print output has already been performed, and the ejection control unit 314 determines that the slip sheet is to be inserted by the inspection process described below.

The ejection control unit 314 of the inspection device 13 replaces the "sheet count value of the previously inserted slip sheet" stored in the control information storage unit 311 with the "sheet count value" of the sheet currently determined that the sheet has a defect. The "sheet count value of the previously inserted slip sheet" is the number of pages serving as a reference for determining whether the slip sheet is inserted. The inspection device 13 transmits the slip sheet insertion information (page m) to the printer 11 (step S204).

Based on the received slip sheet insertion information (page m), the job information generation unit 213 of the printer 11 determines the timing of inserting the slip sheet and generates job information (page m). For example, the timing of inserting the slip sheet may be a timing at which the slip sheet is inserted between page n and page n+1. Then, the printer 11 transmits the generated job information (page m) to the inspection device 13 (step S205).

Step S206 and step S207 illustrated in FIG. 10 are the same as step S103 and step S104, respectively, of the print process without slip sheet illustrated in FIG. 9.

Further, steps S208 to S210 illustrated in FIG. 10 are the same as steps S107 to S109 of the print process without a slip sheet as illustrated in FIG. 9.

At the timing of inserting a slip sheet (for example, between page n and page n+1), the job information processing unit 211 of the printer 11 executes ejection processing of the slip sheet (insertion of the slip sheet) from the sheet feeding tray set in advance, according to the job information (page m) (step S211). The ejection processing of the slip sheet may include processing of causing the printer 11 to print the slip sheet. In a case where the printer 11 is instructed to print the slip sheet, since the print job to print the slip sheet is not a job generated by the DFE 50, the rasterized image of the slip sheet is not transmitted from the DFE 50 to the printer 11. In this case, for example, in step S204, the slip sheet print information 903 for printing the slip sheet is sent from the inspection device 13 to the printer 11. Note that the slip sheet print information 903 may be transmitted from the inspection device 13 to the printer 11 via the DFE 50.

Steps S212 to S214 and step S215 illustrated in FIG. 10 are the same as steps S110 to S112 and step S116, respectively, of the print process without a slip sheet illustrated in FIG. 9.

The reading unit 307 of the inspection device 13 acquires the read image data (page m) read by the first inline sensor 131 and the second inline sensor 132 (step S216). In the case of the job for slip sheet, the master image generation unit 308 of the inspection device 13 does not generate the master image data. The inspection device 13 associates the order of pages detected by the first inline sensor 131 and the second inline sensor 132 with the generated master image data according to the job information of each page including the page m and stores the associated information in the storage unit 305.

When the read image data is based on a slip sheet job (page m), the inspection device 13 controls to display the read image data without performing the inspection process.

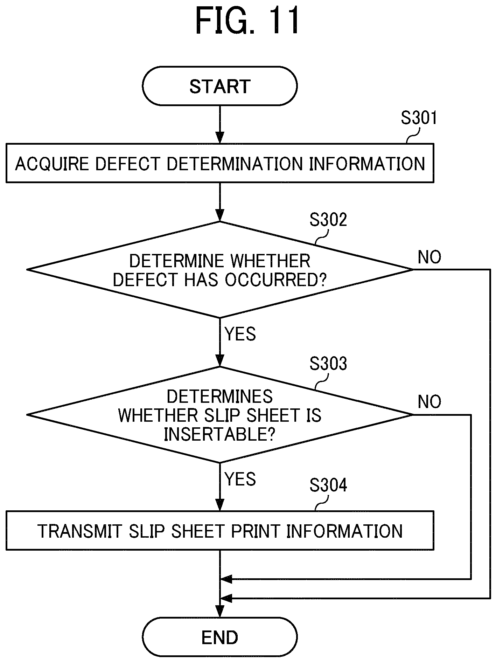

FIG. 11 is a flowchart of an example of the inspection process.

When the inspection process starts, the ejection control unit 314 acquires the defect determination information (step S301). The defect determination information is information generated by the defect determination unit 313 and includes the information of defect determination result per printed page, the sheet count value, and the minimum value of a slip sheet insertion interval.

The sheet count value is set to zero (0) when the power of the image forming apparatus 10 is turned on. The sheet count value is incremented by one each time the print sheet or the slip sheet is ejected to the stacker 14. The minimum value of the slip sheet insertion interval is set in advance in response to an operation performed by a user on the operation panel 133 of the inspection device 13.

The ejection control unit 314 determines the presence or absence of the defect with reference to the defect determination result included in the defect determination information (step S302). When it is determined that there is no defect (NO in step S302), the ejection control unit 314 ends the inspection process.

In step S303, when it is determined that there is a defect (YES in step S302), the ejection control unit 314 determines whether the slip sheet is inserted. Specifically, when the following Equation 1 is satisfied, the ejection control unit 314 determines that the slip sheet is allowed to be inserted. The minimum value of the slip sheet insertion interval < Sheet count value - Sheet count value of the previously inserted slip sheet

However, when the sheet count value of the previously inserted slip sheet is zero (0), the ejection control unit 314 determines that the slip sheet is allowed to be inserted regardless of whether Equation 1 is satisfied or not.

That is, when it is determined that there is a defect in the printed sheet, the ejection control unit 314 determines that the slip sheet is allowed to be inserted in the following two cases. The first case is when the sheet count value (the number of output pages of the defective sheet) of the current sheet determined to be defective is larger than the sheet count value of the slip sheet (the number of output pages of the slip sheet) at the previous insertion of the slip sheet and is greater than a predetermined insertion interval. The second case is when the slip sheet has not been inserted yet.

The determination method is not limited to the above-described method. The following method may be employed as an alternative method. When it is determined that there is a defect in the image of the first conveyance medium, in a case where the first conveyance medium determined to be defective is ejected after the second conveyance medium is ejected and where the value of the slip sheet insertion interval is equal to or smaller than the set interval, the ejection control unit 314 does not eject the second conveyance medium even if the image of the first conveyance medium has a defect. On the other hand, when the value of the slip sheet insertion interval is greater than the set interval, the second conveyance medium is ejected when the ejection control unit 314 has determined that the first conveyance medium is defective. At this time, the display control unit 302 displays information of the defective first conveyance medium ejected after the second conveyance medium previously ejected, in association with information of the second conveyance medium to be currently ejected.

The sheet count value of the previously inserted slip sheet is stored in the control information storage unit 311 and is set to zero (0) when the power of the image forming apparatus 10 is turned on.

When the ejection control unit 314 determines that the slip sheet is not allowed to be inserted (NO in step S303), the ejection control unit 314 ends the inspection process. When the ejection control unit 314 determines that the slip sheet is not allowed to be inserted (YES in step S303), the ejection control unit 314 replaces the "sheet count value of the previously inserted slip sheet" stored in the control information storage unit 311 with the "sheet count value" and transmits the slip sheet insertion information (step S304).

Alternatively, when the slip sheet is not allowed to be inserted, the ejection control unit 314 may wait until suitable timing for inserting the slip sheet and then insert the slip sheet again. That is, the timing at which the slip sheet is inserted is indicated by interrupting again the print job in which the slip sheet is not allowed to be inserted. Due to the above-described configuration, the slip sheet is allowed to be inserted each time the defect is found.

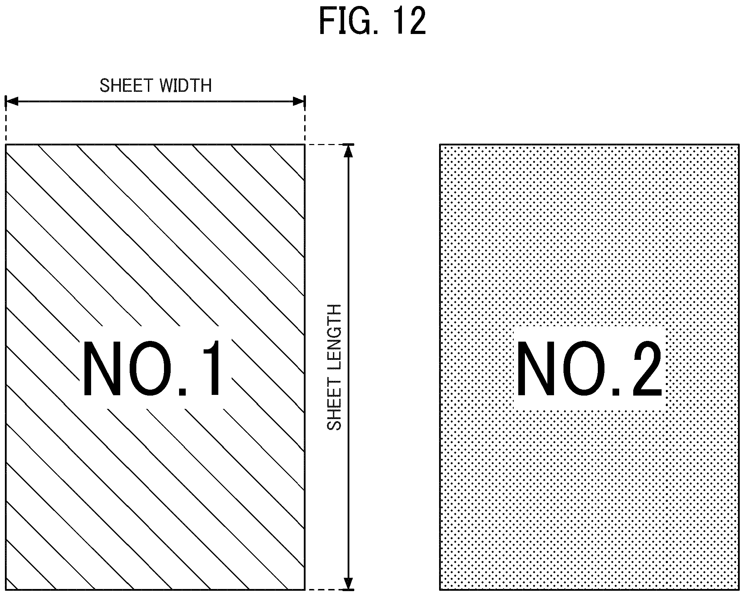

FIG. 12 is a diagram illustrating an example of a slip sheet.

A user freely determines a pattern, design, quality of the slip sheet. However, in a case where a plurality of slip sheets is ejected, it is desirable that text or image for identifying the respective slip sheets is printed so as to know the positions of the respective slip sheets, and it is desirable that colors or patterns of the slip sheets are different from each other. Executing a process described below displays an image obtained by reading the slip sheet. By so doing, the correspondence between each slip sheet and a page in which a defect has been detected is recognized.

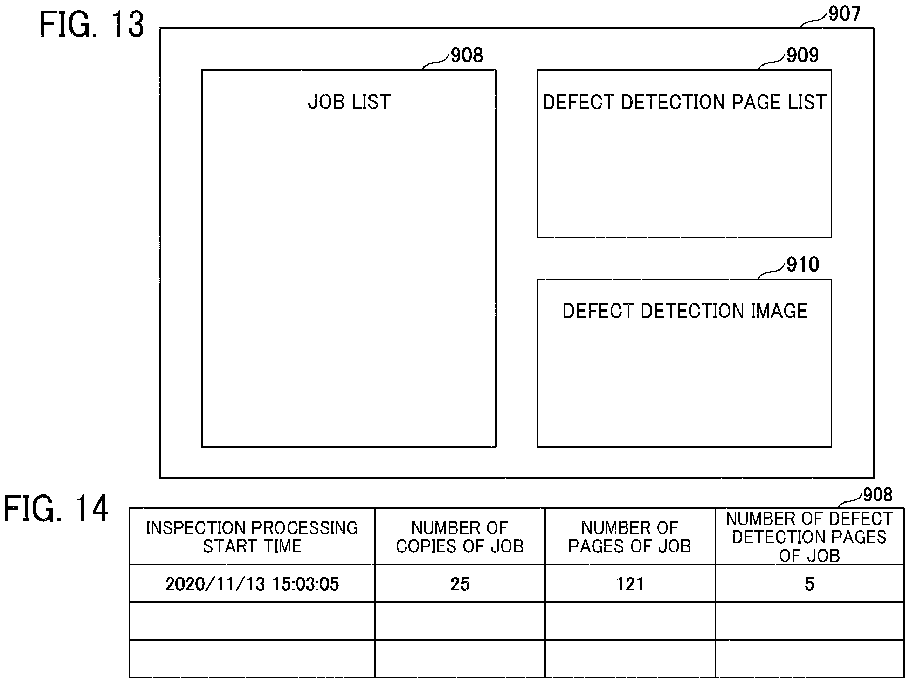

FIG. 13 is a diagram illustrating an example of a defect display screen. The display screen illustrated in FIG. 13 and the subsequent drawings are screens displayed on a display unit by the display control unit 302 transmitting screen information in response to a request received from the display unit such as an operation panel of an apparatus or a web browser of another apparatus. The display control unit 302 may display screen information on the display unit by bidirectional communication or push transmission.

A defect display screen 907 is a screen displayed on the operation panel 133 of the inspection device 13 in order to display the detected defects. The defect display screen 907 includes a "JOB LIST" display area 908, a "DEFECT DETECTION PAGE LIST" display area 909, and a "DEFECT DETECTION IMAGE" display area 910.

FIG. 14 is a diagram illustrating an example of a job list.

The job list displayed in the "JOB LIST" display area 908 includes items "INSPECTION PROCESS START TIME", "NUMBER OF COPIES OF JOB", "NUMBER OF PAGES OF JOB", and "NUMBER OF DEFECT-DETECTED PAGES OF JOB". The job list may include identification information to identify the job, such as job names or job IDs, with which a plurality of jobs is confirmed and identified.

The value of the item "INSPECTION PROCESS START TIME" is a value indicating the start time of the inspection process of the first page of the job.

The value of the item "NUMBER OF COPIES OF JOB" is a value indicating the number of copies output in the job.

The value of the item "NUMBER OF PAGES OF JOB" is a value indicating the number of pages included in the job.

The value of the item "NUMBER OF DEFECT-DETECTED PAGES OF JOB" is a value indicating the number of pages with defects detected in the job.

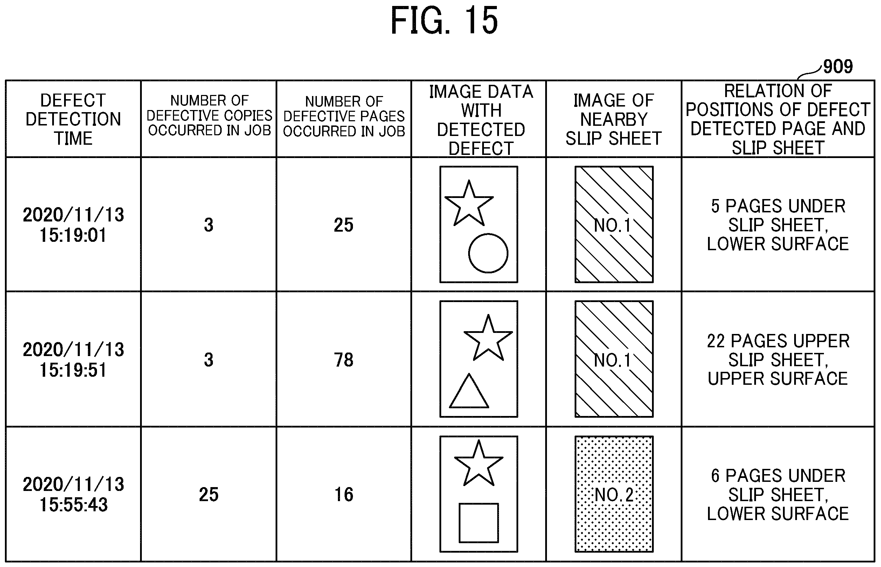

FIG. 15 is a diagram illustrating an example of a defect detection page list.

The defect detection page list displayed in the "DEFECT DETECTION PAGE LIST" display area 909 includes items "DEFECT DETECTION TIME", "NUMBER OF DEFECTIVE COPIES OCCURRED IN JOB", "NUMBER OF DEFECTIVE PAGES OCCURRED IN JOB", "IMAGE DATA WITH DETECTED DEFECT", "IMAGE OF NEARBY SLIP SHEET", and "RELATION OF POSITIONS OF DEFECT DETECTED

PAGE AND SLIP SHEET". That is, the display control unit 302 is configured to display the image of the slip sheet (second conveyance medium) in association with the information indicating the first conveyance medium determined that the image has a defect. As the information indicating the first conveyance medium on which the defective image is formed, a page having the defective image, a defect detection time, the number of copies having the detected defect, identification information of the page having the defective image, and the number of pages having the defective image may be displayed. As an image of the nearby slip sheet, an image that is acquired by the image acquisition unit such as an inline sensor and printed on a slip sheet to be ejected may be displayed. Further, when the image is printed on the slip sheet, an image data for printing may also be displayed. The display control unit 302 may display the image that is acquired by the image acquisition unit and printed on the slip sheet (second conveyance medium) to be ejected, in association with the information indicating the first conveyance medium determined that the image has a defect.

The value of the item "DEFECT DETECTION TIME" is a value indicating the time at which the defect was detected for each page.

The value of the item "NUMBER OF DEFECTIVE COPIES OCCURRED IN JOB" is a value indicating the number of copies where the defect has occurred.

The value of the item "NUMBER OF DEFECTIVE PAGES OCCURRED IN JOB" is a value indicating the number of pages where the defect has occurred.

In the display field of the value of the item "IMAGE DATA WITH DETECTED DEFECT", the read image data of the page having the defective image is displayed.

In the display field of the value of the item "IMAGE OF NEARBY SLIP SHEET", read image data obtained by reading the slip sheet stacked near the page having the defective image is displayed.

The value of the item "RELATION OF POSITIONS OF DEFECT DETECTED PAGE AND SLIP SHEET" is a value indicating the relation between the position of the printed page on which the defect is detected and the position at which the slip sheet is stacked. The relation of positions of the defect detected page and the slip sheet indicates the number of sheets that are sandwiched between the slip sheets and the defect detection face of the defect detected page (upper face or lower face). The relation of positions is displayed in association with information indicating a printed sheet (first conveyance medium) determined that the image has a defect. Note that the "DEFECT DETECTION PAGE LIST" display area 909 displaying the defect detection page list may further display identification information of the defective sheet such as the page ID or the sheet ID, or information included in the job information of FIG. 8 such as the job ID, in association with each defect detection sheet.

Note that the display control unit 302 uses the slip sheet that has already been printed to indicate the defect to display the defect of subsequent printing. Specifically, the display control unit 302 displays the relation of the positions of the defect detected page and the slip sheet already ejected not only for a first defect (first entry in FIG. 15) that triggered the ejection of the slip sheet but also for a second defect (second entry in FIG. 15) detected after the detection of the first defect. The relation of positions of the defect detected page and the slip sheet already ejected is displayed even the ejection control unit 314 determines that the slip sheet is not to be inserted at the time of the detection of the second defect (NO in step S303 in FIG. 11).

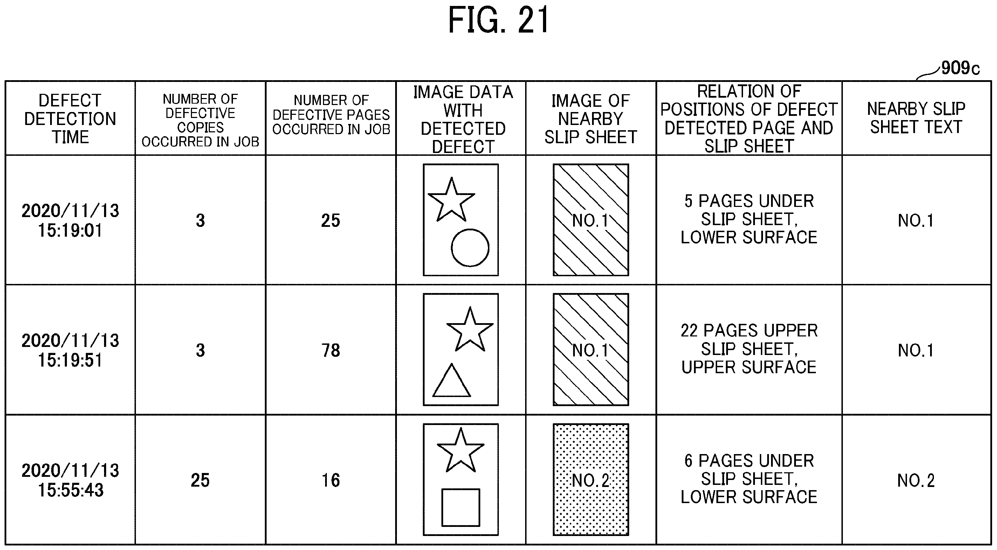

As a result, the same image of the slip sheet is included in a plurality of entries (for example, the first entry and the second entry in FIG. 21) in the defect detection page list. In other words, the display control unit 302 controls display of an image of one slip sheet (second conveyance medium) associating with information indicating a plurality of printed sheets (a plurality of first conveyance media) determined that the images have defects.

When correspondence between the slip sheet and the defect detection page is one-to-many, it is to determine which slip sheet corresponds to each defect detection page is used to display the relation of positions of the defect detection page and the slip sheet. Then, the display control unit 302 specifies the slip sheet stacked closest to the defect detection page. Specifically, the display control unit 302 calculates the number of sheets between the slip sheet stacked on the stacker 14 and the defect detection page based on the job information for the printed slip sheet received from the printer 11, and then specifies the slip sheet having the smallest calculated number of sheets as the closest slip sheet. The read image data of the slip sheet specified in this manner is displayed as the value of the item "IMAGE OF NEARBY SLIP SHEET" of the defect detection page list. The process of specifying the slip sheet stacked closest to the defect detection page may be executed by the job information processing unit 312 of the inspection device 13, the ejection control unit 314 of the inspection device 13, or the printer 11. The inspection device 13 may store the information of the specified slip sheet, and then the display control unit 302 may perform display control with reference to the stored information by the inspection device 13. Further, the image serving as the image of the slip sheet may be an image obtained by reading the slip sheet or a thumbnail image created based on print image data of the slip sheet.

Note that the display control unit 302 serving as a web server provided in the inspection device 13 displays information indicating the first conveyance medium determined that the image has a defect, on a display unit such as a web browser installed in another apparatus or device. Further, in a case where the display unit does not display an image of the second conveyance medium corresponding to the first conveyance medium, the image of the second conveyance medium is acquired while the display unit is being displayed. In other words, the display unit continue displaying the information indicating the first conveyance medium determined to be defective, on the display unit while the image on the second conveyance medium is not displayed. Then, display control is performed to further display the acquired image of the second conveyance medium in association with the information indicating the first conveyance medium. At this time, the web server (display control unit 302) of the inspection device 13 sends and displays screen information that includes information indicating the first conveyance medium determined that the image has a defect. When the image of the second conveyance medium is acquired, display control is performed to further display the acquired image of the second conveyance medium in association with the information indicating the first conveyance medium while the acquired image of the second conveyance medium is displayed on the web browser.

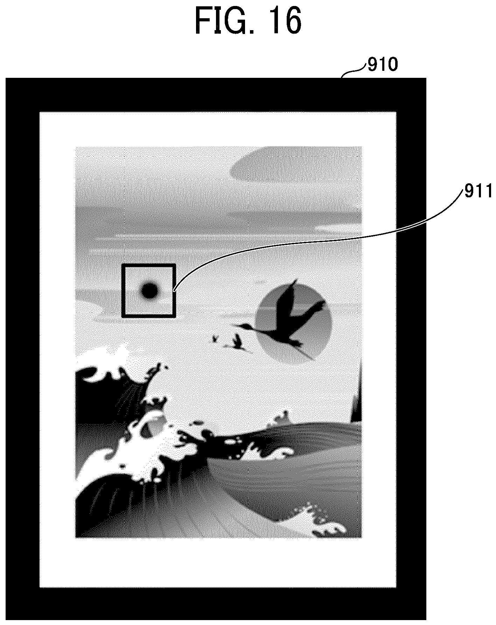

FIG. 16 is a diagram illustrating an example of a defect detection image.

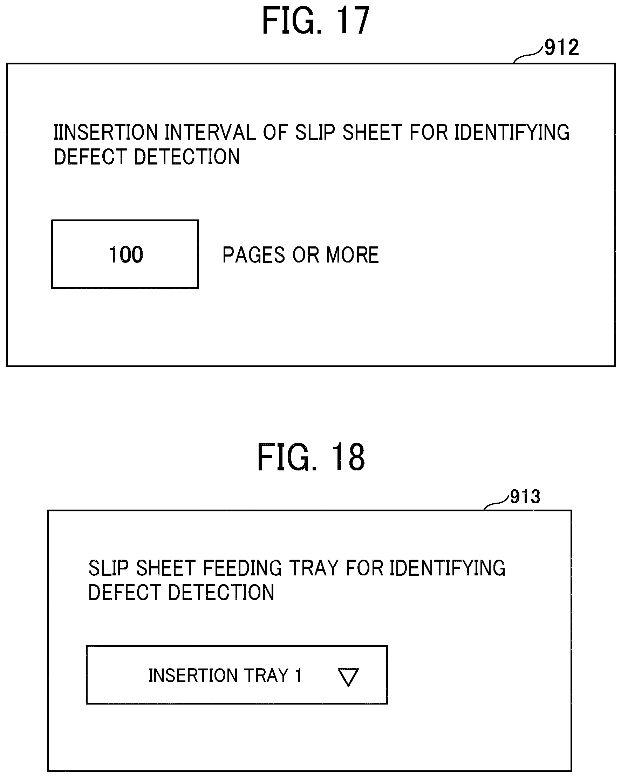

The "DEFECT DETECTION IMAGE" display area 910 in FIG. 15 displays read image data of a printed page designated in the defect detection page list illustrated in FIG. 17 to which a display 911 indicating the defect detection portion is added.

FIG. 17 is a diagram illustrating an example of a setting screen of the insertion interval of the slip sheet.

A setting screen 912 is a screen for setting the slip sheet insertion interval. The display control unit 302 of the inspection device 13 displays information on the setting screen 912. The number of printed sheets to be output is input as the slip sheet insertion interval via the setting screen 912. The storage unit 305 stores the information indicating the slip sheet insertion interval in response to receipt of the information. Since the setting is received, the printer 11 does not eject the slip sheet even if the defect is detected during the slip sheet insertion interval after the previous slip sheet is ejected. Note that the insertion interval of the slip sheet may be set based on the number of outputs (printed sheets), an output time (period), or the number of jobs.

FIG. 18 is a diagram illustrating an example of a setting screen of the slip sheet feeding tray.

A setting screen 913 for slip sheet insertion tray is a screen for selecting a tray from which a slip sheet is to be fed. A tray set in advance is selected. The initial value of the displayed option may be a tray included in the insertion device 15. In response to receipt of the setting of a tray, the storage unit 305 stores information indicating the set tray. Then, the inspection device 13 transmits the slip sheet insertion information that includes the information indicating the set tray to the printer 11.

Note that the setting screen 913 may be displayed, for example, on the operation panel 12 by the control of the printer 11. In this case, the slip sheet insertion information does not include information indicating the slip sheet feeding tray. The printer 11 stores information indicating the tray set in the storage unit 205. Then, when the printer 11 execute a job for inserting a slip sheet, the printer 11 selects a sheet feed source tray based on the information indicating the slip sheet feeding tray.

The image forming system 1 according to the present embodiment reads and displays an image of a slip sheet to be ejected. Due to this configuration, the appearance of the slip sheet is recognized. As a result, a user finds the slip sheet more easily. In addition, the image forming system 1 reads and displays an image each time a slip sheet is ejected. By so doing, even when there is a difference in the appearance of a plurality of slip sheets, the appearance of each slip sheet is easily recognizable. As a result, a user can easily find each slip sheet.

Further, since the relation of the positions of the defect detected page and the slip sheet is displayed on the operation panel as the value of the item "RELATION OF POSITIONS OF DEFECT DETECTED PAGE AND SLIP SHEET" of the defect detection page list, the user is prompted to find the defect detected sheet by counting the number of sheets from the slip sheet found by the user. Since the number of sheets between the slip sheet and the defective sheet is relatively small in general, it is not difficult to count the number of sheets.

As described above, the image forming system 1 of the present embodiment prompts the user to find respective slip sheet and also to find the defective first conveyance medium.

### Second Embodiment

Next, descriptions are given of an image forming system 1 according to a second embodiment of the present disclosure, with reference to the drawings. The configuration of the image forming system 1 according to the second embodiment is basically similar to the configuration of the image forming system 1 according to the first embodiment. Different from the first embodiment, the configuration of the image forming system 1 according to the second embodiment includes a function to determine whether job information of a slip sheet or read image data of a slip sheet has been acquired. Thus, in the following description of the second embodiment, differences from the first embodiment are mainly described. The components of the second embodiment having the same functional configurations as the components of the first embodiment are denoted by the same reference numerals used in the description of the first embodiment, and descriptions of the components similar to the first embodiment are omitted in the second embodiment.

The display control unit 302 of the inspection device 13 determines whether the job information of the slip sheet and the read image data of the slip sheet are acquired, and then determines an item so that the value of the item is to be displayed in the defect detection page list according to the determination result.

The following descriptions are given of operations of the image forming system 1 according to the second embodiment of the present disclosure.

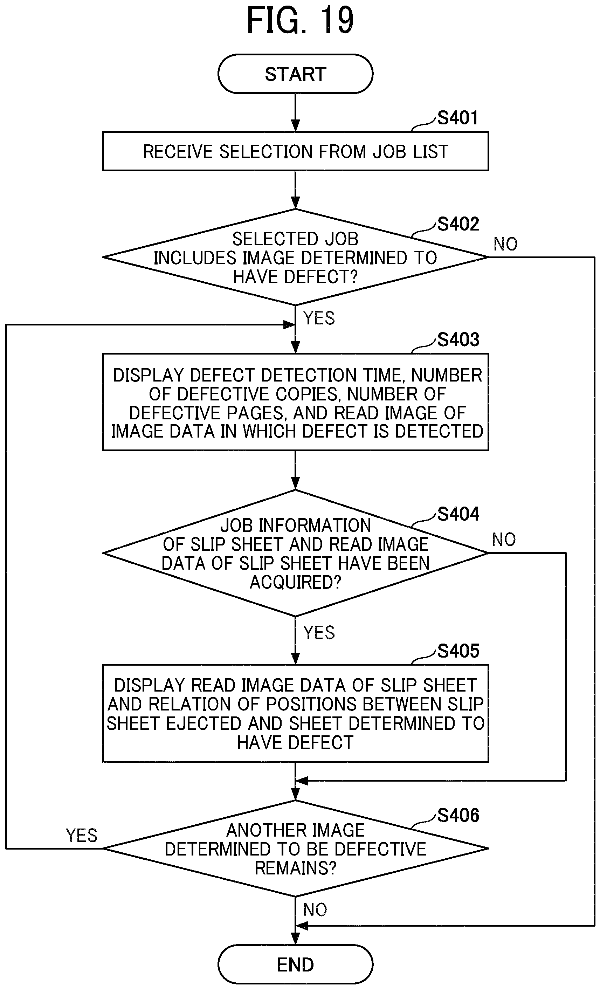

FIG. 19 is a flowchart of a display control process, according to the second embodiment of the present disclosure.

The display control process described in FIG. 19 is a control for determining contents to be displayed on the defect detection page list. Specifically, the inspection device 13 receives a selection from the job list on the defect display screen illustrated in FIG. 13 (step S401). The display control unit 302 determines whether the selected job includes a defective image (step S402).

When the display control unit 302 determines the selected job does not include a defective image (NO in step S402), the display control unit 302 ends the display control process. In this case, the value of the defect detection page list is not displayed.

When the display control unit 302 determines the selected job includes a defective image (YES in step S402), the display control unit 302 displays the defect detection time, the number of copies having the detected defect, the number of pages having the detected defect, and the read image data of the image having the detected defect (step S403).

When there is a plurality of detected defects, the display control unit 302 executes processing from step S403 to step S405 for each defect.

Next, the display control unit 302 determines whether job information of a slip sheet and read image data of the slip sheet have been acquired (step S404). In a case where the job information of the slip sheet is acquired, the display control unit 302 specifies a nearby slip sheet as the slip sheet to be displayed in association with each defect. Specifically, the display control unit 302 calculates the number of sheets between the slip sheet stacked on the stacker 14 and the defect detection page, and then specifies the slip sheet having the smallest calculated number of sheets as the closest slip sheet. Then, the display control unit 302 determines whether the read image data of the slip sheet specified as the nearby slip sheet has been acquired.

When the display control unit 302 determines that the job information of the slip sheet and the read image data of the slip sheet are acquired (YES in step S404), the display control unit 302 displays the read image information of the slip sheet (the item "IMAGE OF NEARBY SLIP SHEET") and the relation between the positions of the ejected slip sheet and the defective sheet is stacked (the item "RELATION OF POSITIONS OF DEFECT DETECTED PAGE AND SLIP SHEET") (step S405). In other words, the display control unit 302 is configured to display information indicating a relation of stacking positions between the first conveyance medium and the second conveyance medium that is ejected, in association with the information indicating the first conveyance medium.

When the display control unit 302 determines that either the job information of the slip sheet or the read image of the slip sheet has not been acquired (NO in step S404), the display control unit 302 skips the processing of step S405. When the processing of step S405 is skipped and the read image data of the slip sheet is acquired later, the slip sheet information including the read image data of the slip sheet and the information of relation position are collectively displayed in association with each skipped defect information (information of the first conveyance medium having a defect) by the processing of step S405.

The display control unit 302 determines whether another defective image is detected (step S406). When the display control unit 302 determines that another defective image is detected (YES in step S406), the display control unit 302 returns to the processing of step S403 and executes processing for the newly detected defective image.

When the display control unit 302 determines that another defective image is not detected (NO in step S406), the display control unit 302 ends the process.

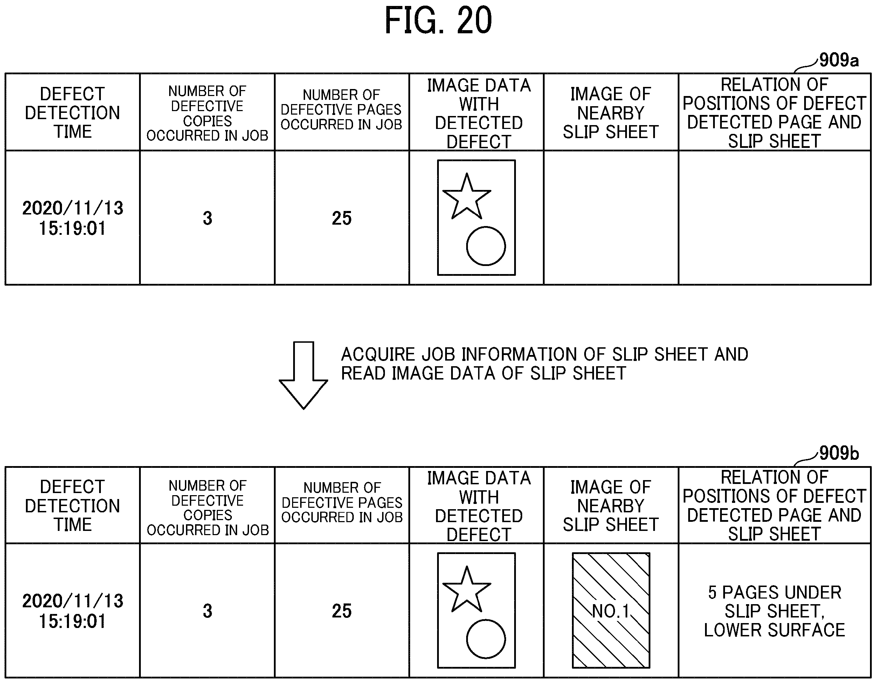

FIG. 20 is a diagram illustrating a result of display control, according to the second embodiment of the present disclosure.

The defect detection page list 909a indicates a defect detection page list displayed immediately after it is determined that a page has a defect. Immediately after it is determined that a page has a defect, the inspection device 13 has not acquired job information of a slip sheet or read image data of a slip sheet. Therefore, in step S404 of the flowchart in FIG. 19, the display control unit 302 determines that either the job information of the slip sheet or the read image data of the slip sheet has not been acquired. As a result, the display fields of the values of the items "IMAGE OF NEARBY SLIP SHEET" and "RELATION OF POSITIONS OF DEFECT DETECTED PAGE AND SLIP SHEET" become blank.

The defect detection page list 909b indicates a defect detection page list displayed after the inspection device 13 had acquired the job information of the slip sheet and the read image data of the slip sheet. In this case, in step S404 of the flowchart in FIG. 19, the display control unit 302 determines that the job information of the slip sheet and the read image data of the slip sheet are acquired. Accordingly, the read image data of the slip sheet and the relation between the position of the ejected slip sheet and the position at which the sheet having a detected defect is stacked are displayed respectively in the display fields of the values of the items "IMAGE OF NEARBY SLIP SHEET" and "RELATION OF POSITIONS OF DEFECT DETECTED PAGE AND SLIP SHEET".

It is assumed that it takes time to complete the processing of reading the image of the slip sheet after it is determined that a page has a defect. When the defect detection page list is displayed after the value of each item to be displayed is determined, it takes time to display the presence or absence of a defect. On the other hand, according to the image forming system 1 of the present embodiment, the inspection device 13 determines the item for displaying the value according to the timing of acquiring the job information of the slip sheet and the read image data of the slip sheet. Therefore, the information indicating the presence of the defect is displayed immediate after the defect is detected.

Although FIG. 15 illustrates an example in which the defect detection page list is displayed so that rows are added downward in the order of detection, the defect detection page list may be displayed so that rows are added upward in the order of detection in accordance with images stacked on the stacker 14.

The reading unit 307 may read characters on the slip sheet by character recognition using optical character recognition (OCR). In other words, read characters are text information acquired by character recognition. In this case, the display control unit 302 may control display by adding an item such as "NEARBY SLIP SHEET TEXT" to the defect detection page list illustrated in FIG. 15. Text is acquired by performing character recognition processing on read image data obtained by reading a slip sheet stacked near a page in which a defect has been detected. The acquired text is then displayed in the value display field of the item "NEARBY SLIP SHEET TEXT" as illustrated in FIG. 21. As a result, a user is prompted to distinguish respective slip sheets from each other more easily.

According to the image forming system 1 of the present embodiment, the slip sheet that has already been printed to indicate the defect is used to display the defect in subsequent printing. Due to the above-described configuration, a plurality of defective portions is displayed with one slip sheet, and even when the plurality of defects occurs, the number of slip sheets to be inserted is determined appropriately.

Each of the above-described embodiments describes the example in which an image is not printed on a slip sheet and the slip sheet is simply ejected. As a result, the print process of the slip sheet is omitted, and the toner is not consumed. On the other hand, an image may be printed on a slip sheet. As a result, generating a slip sheet with an outstanding color tone using inexpensive sheets is achieved, configuration changes such as changes in color patterns is flexibly achieved, and saving the effort of separately preparing sheets for the slip sheet.

In each of the above-described embodiments, the DFE 50, the inspection device 13 and the printer 11 are configured to share the above-described processing steps in various combinations. Further, the elements of the DFE 50, the inspection device 13 and the printer 11 may be integrated into one apparatus or may be separately disposed in a plurality of different apparatuses.

For example, the above-described embodiments describe the examples in which the inspection device 13 generates the slip sheet insertion information and the printer 11 generates job data for the slip sheet based on the slip sheet insertion information. As a result, the inspection device 13 reduces the load of processing other than inspection and avoids a delay in the speed of inspection. However, the inspection device 13 may generate job data for the slip sheet and transmit the job data to the printer 11. Due to the above-described configuration, the printer 11 does not include a special mechanism for printing on a slip sheet, thus a system is easily introduced.

In an embodiment, the DFE 50 or the inspection device 13 may be configured as an information processing system including a plurality of computing devices such as a server cluster. The plurality of computing devices is configured to communicate with one another via any type of communication link, including a network or shared memory to implement the processing described in the present invention. For example, a web server function including a display control unit provided in a device such as the inspection device 13, the DFE 50, or the printer 11 may be provided in an information processing apparatus in the cloud. Then, device information including a defect inspection result collected from each device, an acquired image data of a slip sheet, or job information may be uploaded to the information processing apparatus in the cloud as appropriate. In addition, the uploaded information may be displayed as a list or automatically updated using bidirectional communication, by acquiring device information via the Internet using software such as a web browser of device or various devices.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components arranged to perform the recited functions.

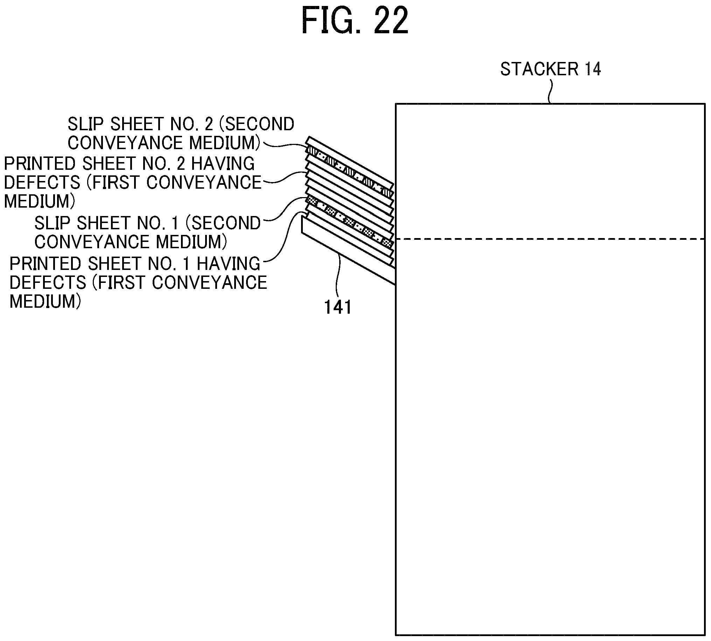

In the above-described embodiments, the stacker 14 includes one sheet ejection tray 141. However, in other embodiments, the stacker 14 may include the plurality of sheet ejection trays 141. For example, the stackers 14 and the sheet ejection trays 141 illustrated in FIGS. 22 to 25 are configured to receive and stack ejected printed sheets and ejected slip sheets and are examples of the ejection device according to the present disclosure. In the ejection and stacking method illustrated in FIG. 22, printed sheets and slip sheets are collectively ejected onto one sheet ejection tray 141. Thus, even in the ejection, a plurality of printed sheets having defects and the plurality of slip sheets are easily distinguished from each other.

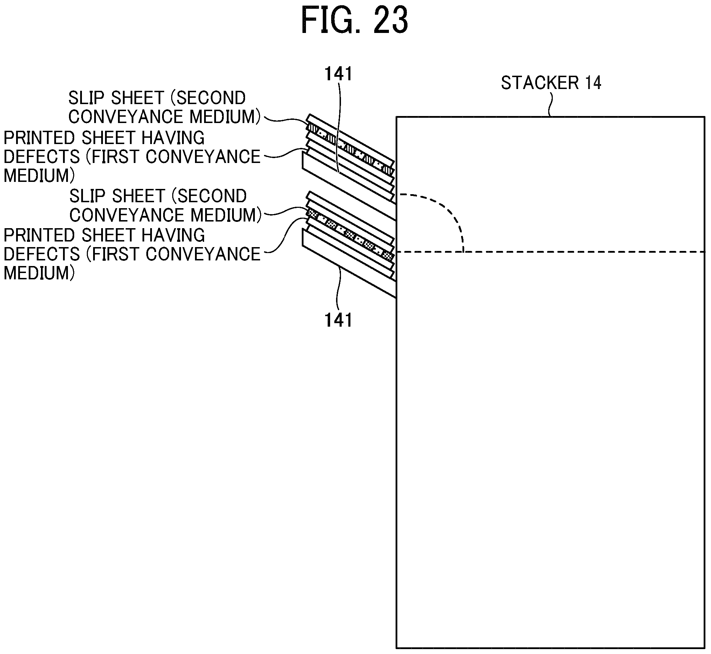

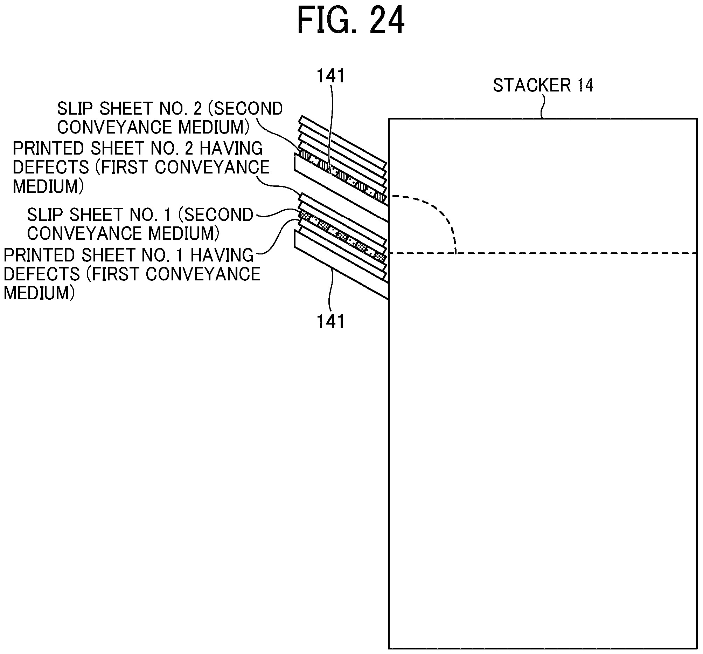

Further, when the sheets are collectively ejected to one sheet ejection tray, the plurality of printed sheets having defects are included across the plurality of jobs or a plurality of copies of the same job which are continuously ejected. However, the user easily grasps the position of the defective sheet by ejecting the plurality of slip sheets that is distinguished from each other even if a relatively large number of sheets is ejected. Further, as illustrated in FIG. 23, the slip sheets and the printed sheets may be separately ejected to the plurality of sheet ejection trays 141. Further, for example, as illustrated in FIG. 24, the slip sheet ejected to the upper sheet ejection tray 141 may indicate that the image that has the defect in the printed sheets of the lower sheet ejection tray 141.

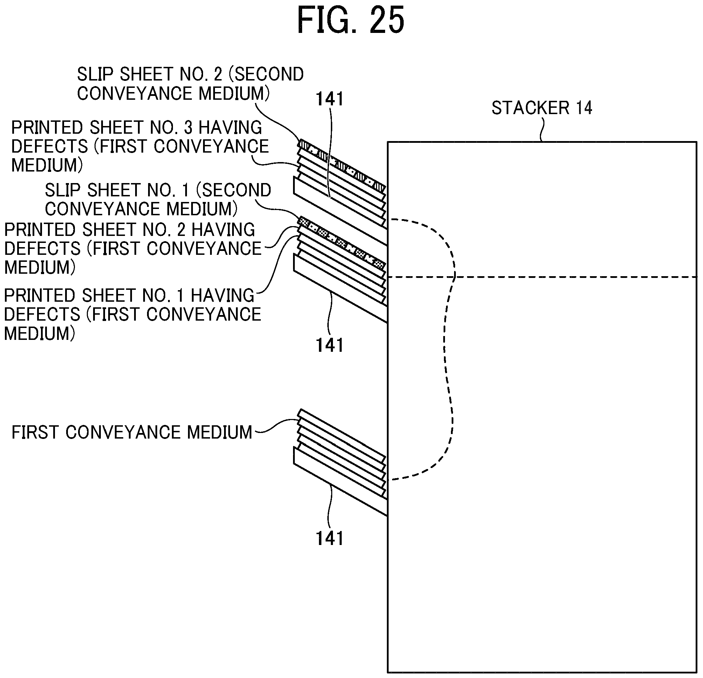

Further, in a case where sheets are ejected to the plurality of sheet ejection trays 141, the sheets are ejected separately to the sheet ejection trays 141 for each print job. In this case, as illustrated in FIG. 29, when the slip sheet is ejected to the uppermost position of the sheet ejection trays 141, the slip sheet is not overlaid by the upper printed sheets, and the visibility of the slip sheet is enhanced, so that the slip sheet is more easily found. In this case, when the slip sheet is not ejected at the uppermost position (the lowermost sheet ejection tray 141 in FIG. 25), the user finds that no defective sheet has been detected in the print job, thereby enhancing the workability.

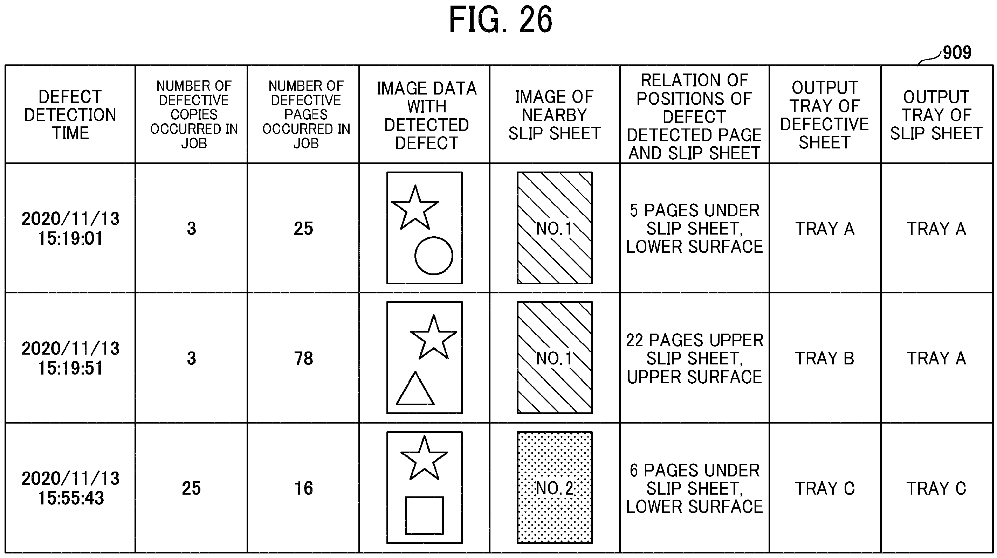

In addition, as illustrated in FIG. 26, in the case where sheets are separately ejected to the plurality of sheet ejection trays 141, the display control unit 302 may display identification information (tray A, tray B) of the ejected sheet ejection tray 141 or the level of sheet ejection tray (the first tray from the top, the second tray from the top) for each cover of printed sheets with defects. This configuration indicates the sheet ejection tray 141 to which each of the defective sheet and the slip sheet is ejected.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An inspection device (13) comprising:
an image acquisition unit (131, 132, 307) configured to acquire an image formed on a first conveyance medium;
a defect determination unit (313) configured to determine whether the image on the first conveyance medium is defective, based on the image acquired by the image acquisition unit (131, 132, 307);
an ejection control unit (314) configured to control to eject a second conveyance medium in a case where the image on the first conveyance medium is defective; and
a display control unit (302),
**characterized in that** the display control unit (302) is configured to control to display an image formed on the second conveyance medium in association with information indicating the first conveyance medium determined to be defective.

2. The inspection device (13) according to claim 1,
wherein the image acquisition unit (131, 132, 307) is configured to acquire the image on the second conveyance medium to be ejected, and
wherein the display control unit (302) is configured to control to display the image on the second conveyance medium that is acquired by the image acquisition unit (131, 132, 307), in association with the information indicating the first conveyance medium determined to be defective.

3. The inspection device (13) according to claim 1 or 2,
wherein the display control unit (302) is configured to control to display an image on one second conveyance medium in association with information indicating a plurality of first conveyance media determined to be defective.

4. The inspection device (13) according to any one of claims 1 to 3,
wherein the display control unit (302) is configured to control to display text information acquired by character recognition of the image on the second conveyance medium.

5. The inspection device (13) according to any one of claims 1 to 4,
wherein the display control unit (302) is configured to control to:
display, on a display unit, the information indicating the first conveyance medium determined to be defective,
continue, on the display unit, displaying the information indicating the first conveyance medium determined to be defective while the image on the second conveyance medium is not displayed, and
display, on the display unit, the image on the second conveyance medium in association with the information indicating the first conveyance medium determined to be defective, in response to acquisition of the image of the second conveyance medium.

6. The inspection device (13) according to claim 5,
wherein the display unit is a web browser included in another device other than the inspection device (13),
wherein the display control unit (302) is a web server included in the inspection device (13), and
wherein the web server is configured to:
transmit screen information including the information indicating the first conveyance medium determined to be defective, to the web browser to display the screen information on the web browser; and
in response to acquisition of the image on the second conveyance medium, control to display, on the web browser, the image on the second conveyance medium, in association with the information indicating the first conveyance medium determined to be defective, with the screen information being displayed on the web browser.

7. The inspection device (13) according to any one of claims 1 to 6,
wherein the display control unit (302) is configured to control to display information indicating a relation of stacking positions between the first conveyance medium determined to be defective and the second conveyance medium that is ejected, in association with the information indicating the first conveyance medium determined to be defective.

8. An image forming system (1) comprising:
an image forming device (11) configured to form the image on the first conveyance medium; and
the inspection device according to any one of claims 1 to 7.

9. An inspection method to be executed by a computer on the inspection device of claim 1, the inspection method comprising:
acquiring an image formed on a first conveyance medium;
determining (S402) whether the image on the first conveyance medium is defective, based on the image acquired by the acquiring;
ejecting (S304) a second conveyance medium in a case where the image on the first conveyance medium is defective; and
**characterized by** displaying (S403, S405) an image on the second conveyance medium in association with information indicating the first conveyance medium determined to be defective.

10. A carrier medium carrying computer-readable program code that causes a computer to perform the inspection method according to claim 9.

## Patentansprüche

1. Inspektionsvorrichtung (13), die Folgendes umfasst:
eine Bilderfassungseinheit (131, 132, 307), konfiguriert zum Erfassen eines auf einem ersten Transportmedium erzeugten Bildes;
eine Fehlerfeststellungseinheit (313), konfiguriert zum Feststellen auf der Basis des von der Bilderfassungseinheit (131, 132, 307) erfassten Bildes, ob das Bild auf dem ersten Transportmedium fehlerhaft ist;
eine Auswurfsteuereinheit (314), konfiguriert zum Steuern zum Auswerfen eines zweiten Transportmediums, falls das Bild auf dem ersten Transportmedium fehlerhaft ist; und
eine Anzeigesteuereinheit (302),
**dadurch gekennzeichnet, dass** die Anzeigesteuereinheit (302) zum Steuern zum Anzeigen eines auf dem zweiten Transportmedium erzeugten Bildes in Verbindung mit Informationen konfiguriert ist, die das als fehlerhaft festgestellte erste Transportmedium angeben.

2. Inspektionsvorrichtung (13) nach Anspruch 1,
wobei die Bilderfassungseinheit (131, 132, 307) zum Erfassen des Bildes auf dem zweiten auszuwerfenden Transportmedium konfiguriert ist, und
wobei die Anzeigesteuereinheit (302) zum Steuern zum Anzeigen des Bildes auf dem von der Bilderfassungseinheit (131, 132, 307) erfassten zweiten Transportmedium in Verbindung mit den Informationen konfiguriert ist, die das als fehlerhaft festgestellte erste Transportmedium angeben.

3. Inspektionsvorrichtung (13) nach Anspruch 1 oder 2,
wobei die Anzeigesteuereinheit (302) zum Steuern zum Anzeigen eines Bildes auf einem zweiten Transportmedium in Verbindung mit Informationen konfiguriert ist, die eine Vielzahl von als fehlerhaft festgestellten ersten Transportmedien angeben.

4. Inspektionsvorrichtung (13) nach einem der Ansprüche 1 bis 3,
wobei die Anzeigesteuereinheit (302) zum Steuern zum Anzeigen von durch Zeichenerkennung des Bildes auf dem zweiten Transportmedium erfassten Textinformationen konfiguriert ist.

5. Inspektionsvorrichtung (13) nach einem der Ansprüche 1 bis 4,
wobei die Anzeigesteuereinheit (302) konfiguriert ist zum Steuern zum:
Anzeigen, auf einer Anzeigeeinheit, der Informationen, die das als defekt festgestellte erste Transportmedium angeben,
Fortsetzen, auf der Anzeigeeinheit, der Anzeige der Informationen, die das als defekt festgestellte erste Transportmedium angeben, während das Bild auf dem zweiten Transportmedium nicht angezeigt wird, und
Anzeigen, auf der Anzeigeeinheit, des Bildes auf dem zweiten Transportmedium in Verbindung mit den Informationen, die das als defekt festgestellte erste Transportmedium angeben, als Reaktion auf die Erfassung des Bildes des zweiten Transportmediums.

6. Inspektionsvorrichtung (13) nach Anspruch 5,
wobei die Anzeigeeinheit ein in einer anderen Vorrichtung als der Inspektionsvorrichtung (13) eingeschlossener Webbrowser ist,
wobei die Anzeigesteuereinheit (302) ein in der Inspektionsvorrichtung (13) eingeschlossener Webserver ist, und
wobei der Webserver konfiguriert ist zum:
Übertragen von Bildschirminformationen, die die Informationen einschließen, die das als defekt festgestellte erste Transportmedium angeben, zum Webbrowser, um die Bildschirminformationen auf dem Webbrowser anzuzeigen; und
Steuern, als Reaktion auf die Erfassung des Bildes auf dem zweiten Transportmedium, zum Anzeigen des Bildes, auf dem Webbrowser, auf dem zweiten Transportmedium in Verbindung mit den Informationen, die das als defekt festgestellte erste Transportmedium angeben, wobei die Bildschirminformationen auf dem Webbrowser angezeigt werden.

7. Inspektionsvorrichtung (13) nach einem der Ansprüche 1 bis 6,
wobei die Anzeigesteuereinheit (302) zum Steuern zum Anzeigen von Informationen konfiguriert ist, die ein Verhältnis von Stapelpositionen zwischen dem als fehlerhaft festgestellten ersten Transportmedium und dem ausgeworfenen zweiten Transportmedium angeben, in Verbindung mit den Informationen, die das als fehlerhaft festgestellte erste Transportmedium angeben.

8. Bilderzeugungssystem (1), das Folgendes umfasst:
eine Bilderzeugungsvorrichtung (11), die zum Erzeugen des Bildes auf dem ersten Transportmedium konfiguriert ist; und
die Inspektionsvorrichtung nach einem der Ansprüche 1 bis 7.

9. Inspektionsverfahren, das durch einen Computer auf der Inspektionsvorrichtung nach Anspruch 1 auszuführen ist, wobei das Inspektionsverfahren Folgendes umfasst:
Erfassen eines auf einem ersten Transportmedium erzeugten Bildes;
Feststellen (S402), ob das Bild auf dem ersten Transportmedium fehlerhaft ist, auf der Basis des durch das Erfassen erfassten Bildes;
Auswerfen (S304) eines zweiten Transportmediums, falls das Bild auf dem ersten Transportmedium fehlerhaft ist; und
**gekennzeichnet durch** das Anzeigen (S403, S405) eines Bildes auf dem zweiten Transportmedium in Verbindung mit Informationen, die das als fehlerhaft festgestellte erste Transportmedium angeben.

10. Trägermedium, das einen computerlesbaren Programmcode trägt, der einen Computer zum Durchführen des Inspektionsverfahrens nach Anspruch 9 veranlasst.

## Revendications

1. Dispositif d'inspection (13) comprenant :
une unité d'acquisition d'image (131, 132, 307) configurée pour acquérir une image formée sur un premier support de transport,
une unité de détermination de défaut (313) configurée pour déterminer si oui ou non l'image sur le premier support de transport est défectueuse, sur la base de l'image acquise par l'unité d'acquisition d'image (131, 132, 307),
une unité de commande d'éjection (314) configurée pour commander pour éjecter un deuxième support de transport dans le cas où l'image sur le premier support de transport est défectueuse, et
une unité de commande d'affichage (302) ;
**caractérisé en ce que** l'unité de commande d'affichage (302) est configurée pour commander pour afficher une image formée sur le deuxième support de transport en association avec des informations indiquant le premier support de transport déterminé comme étant défectueux.

2. Dispositif d'inspection (13) selon la revendication 1,
dans lequel l'unité d'acquisition d'image (131, 132, 307) est configurée pour acquérir l'image sur le deuxième support de transport à éjecter, et
dans lequel l'unité de commande d'affichage (302) est configurée pour commander pour afficher l'image sur le deuxième support de transport qui est acquise par l'unité d'acquisition d'image (131, 132, 307), en association avec les informations indiquant le premier support de transport déterminé comme étant défectueux.

3. Dispositif d'inspection (13) selon la revendication 1 ou 2,
dans lequel l'unité de commande d'affichage (302) est configurée pour commander pour afficher une image sur un deuxième support de transport en association avec des informations indiquant une pluralité de premiers supports de transport déterminés comme étant défectueux.

4. Dispositif d'inspection (13) selon l'une quelconque des revendications 1 à 3,
dans lequel l'unité de commande d'affichage (302) est configurée pour commander pour afficher des informations textuelles acquises par reconnaissance de caractères de l'image sur le deuxième support de transport.

5. Dispositif d'inspection (13) selon l'une quelconque des revendications 1 à 4,
dans lequel l'unité de commande d'affichage (302) est configurée pour commander pour :
afficher, sur une unité d'affichage, les informations indiquant le premier support de transport déterminé comme étant défectueux,
continuer l'affichage, sur l'unité d'affichage, des informations indiquant le premier support de transport déterminé comme étant défectueux, tandis que l'image sur le deuxième support de transport n'est pas affichée, et
afficher, sur l'unité d'affichage, l'image sur le deuxième support de transport en association avec les informations indiquant le premier support de transport déterminé comme étant défectueux, en réponse à l'acquisition de l'image du deuxième support de transport.

6. Dispositif d'inspection (13) selon la revendication 5,
dans lequel l'unité d'affichage est un navigateur Web inclus dans un autre dispositif, différent du dispositif d'inspection (13),
dans lequel l'unité de commande d'affichage (302) est un serveur Web inclus dans le dispositif d'inspection (13), et
dans lequel le serveur Web est configuré pour :
transmettre des informations d'écran, incluant les informations indiquant le premier support de transport déterminé comme étant défectueux, au navigateur Web pour afficher les informations d'écran sur le navigateur Web, et
en réponse à l'acquisition de l'image sur le deuxième support de transport, commander pour afficher, sur le navigateur Web, l'image sur le deuxième support de transport, en association avec les informations indiquant le premier support de transport déterminé comme étant défectueux, les informations d'écran étant affichées sur le navigateur Web.

7. Dispositif d'inspection (13) selon l'une quelconque des revendications 1 à 6,
dans lequel l'unité de commande d'affichage (302) est configurée pour commander pour afficher des informations indiquant une relation de positions d'empilement entre le premier support de transport déterminé comme étant défectueux et le deuxième support de transport qui est éjecté, en association avec les informations indiquant le premier support de transport déterminé comme étant défectueux.

8. Système de formation d'images (1) comprenant :
un dispositif de formation d'image (11) configuré pour former l'image sur le premier support de transport, et
le dispositif d'inspection selon l'une quelconque des revendications 1 à 7.

9. Procédé d'inspection destiné à être exécuté par un ordinateur sur le dispositif d'inspection selon la revendication 1, le procédé d'inspection comprenant :
l'acquisition d'une image formée sur un premier support de transport,
la détermination (S402) de si oui ou non l'image sur le premier support de transport est défectueuse, sur la base de l'image acquise lors de ladite acquisition,
l'éjection (S304) d'un deuxième support de transport dans le cas où l'image sur le premier support de transport est défectueuse, et
**caractérisé par** l'affichage (S403, S405) d'une image sur le deuxième support de transport en association avec des informations indiquant le premier support de transport déterminé comme étant défectueux.

10. Support porteur portant un code de programme lisible par ordinateur qui amène un ordinateur à réaliser le procédé d'inspection selon la revendication 9.
